# EUROPEAN PATENT APPLICATION

(11) **EP 4 700 607 A1**
(43) Date of publication of application: **25.02.2026**
(21) Application number: 24806281.2
(22) Date of filing: 18.04.2024
(51) Int. Cl.: G06F 16/907

(54) **METADATA GENERATION METHOD, METADATA VERIFICATION METHOD AND ELECTRONIC DEVICE**

(30) Priority: 16.05.2023 CN 202310554152; 27.06.2023 CN 202310769712; 12.07.2023 CN 202310857560
(71) Applicant: Huawei Technologies Co., Ltd., Shenzhen, Guangdong 518129 (CN)
(72) Inventor: HU, Ziyuan, Shenzhen, Guangdong 518129 (CN); KANG, Xin, Shenzhen, Guangdong 518129 (CN); ZHOU, Haibo, Shenzhen, Guangdong 518129 (CN)
(74) Representative: Goddar, Heinz J.
(86) International application number: PCT/CN2024/088596
(87) International publication number: WO 2024/234924

(57) **Abstract**

Embodiments of this application provide a metadata generation method, a verification method, and an electronic device. The metadata generation method includes: first, obtaining first media content; and then generating metadata of the first media content, where the metadata of the first media content includes initial information of the first media content, a first media hash value, and a first digital signature. The first media hash value may be used to verify whether metadata is the metadata of the first media content. The initial information may be used for initial identity certification of the first media content, and may serve as a one-dimension certificate of authenticity of the first media content. The first digital signature may be used to verify whether the initial information and the first media hash value are tampered with. In this way, the metadata may be used for source tracing of the first media content. Further, this can help a user to determine authenticity of the media content to some extent.

## Description

### TECHNICAL FIELD

Embodiments of this application relate to the data processing field, and in particular, to a metadata generation method, a verification method, and an electronic device.

### BACKGROUND

With development of artificial intelligence (Artificial Intelligence, AI) technologies, AI generated content (Artificial Intelligence Generated Content, AIGC) has seen explosive growth. AI can generate (or modify existing media content to obtain) novel, interesting, and diversified digital content (such as images, music, and natural languages), to satisfy varied user preferences and scenarios.

However, modification of media content aggravates propagation of some error information and false information, making it difficult for users to determine authenticity of the media content. Therefore, how to help the users determine authenticity of the media content is crucial.

### SUMMARY

To resolve a problem that users cannot determine authenticity of media content, this application provides a metadata generation method, a verification method, and an electronic device. Metadata generated by using the generation method may be used for source tracing of the media content, and can help the users determine authenticity of the media content to some extent.

According to a first aspect, an embodiment of this application provides a metadata generation method. The method includes:
obtaining first media content; and
generating metadata of the first media content, where the metadata of the first media content includes initial information of the first media content, a first media hash value, and a first digital signature, the first media hash value is a hash value of the first media content, the first digital signature is a digital signature of first data, and the first data is data determined based on at least the initial information and the first media hash value.

For example, the method includes: first obtaining the first media content; and then generating the metadata of the first media content, where the metadata of the first media content includes the initial information of the first media content, the first media hash value, a first combined hash value, and a digital signature of the first combined hash value, the first media hash value is the hash value of the first media content, and the first combined hash value is determined based on the initial information and the first media hash value.

The first media hash value may be used to verify whether metadata is the metadata of the first media content. The initial information may be used for initial identity certification of the first media content, and may serve as a one-dimension certificate of authenticity of the first media content. The first digital signature may be used to verify whether the initial information and the first media hash value are tampered with. In this way, the metadata may be used for source tracing of the first media content. Further, this can help a user to determine authenticity of the media content to some extent.

For example, the initial information of the first media content may be information generated when the first media content is generated. For example, the initial information of the first media content may include a plurality of types of information. It should be noted that a type of information included in the initial information may be determined based on a scenario, a media type, and the like. Types of information included in initial information corresponding to different scenarios and different media types may be different. This is not limited in this application. In other words, a type of information included in the initial information may be agreed in advance based on a scenario and a media type. This can improve readability of the metadata.

For example, the first data is data obtained by combining at least the first media hash value and the initial information of the first media content, or the first data is data obtained by combining at least a hash value of the initial information and a hash value of the first media hash value.

For example, the first data is a hash value determined based on at least the initial information and the first media hash value.

For example, the first data is a hash value determined based on at least a hash value of the first media hash value and a hash value of the initial information of the first media content, or the first data is a hash value of data obtained by combining at least the initial information and the first media hash value.

For example, the metadata of the first media content further includes the first data.

For example, the metadata of the first media content further includes a hash value of the first media hash value and a hash value of the initial information of the first media content.

For example, the metadata of the first media content further includes a first uniform resource locator (URL), and the first URL indicates a location of the initial information of the first media content or the first media hash value in the metadata of the first media content.

For example, the first data is a hash value of data obtained by combining at least the hash value of the first media hash value, the hash value of the initial information of the first media content, and a uniform resource locator.

For example, generating the metadata of the first media content includes:
obtaining the initial information of the first media content and the first media hash value;
encapsulating at least the initial information of the first media content and the first media hash value to obtain first encapsulated data (Trust Indicators);
performing hash calculation on the first media hash value to obtain the hash value of the first media hash value; and performing hash calculation on the initial information of the first media content to obtain the hash value of the initial information of the first media content;
encapsulating at least the hash value of the first media hash value and the hash value of the initial information of the first media content to obtain second encapsulated data (declaration hash);
digitally signing the first data, where the first data is data determined based on at least the hash value of the first media hash value and the hash value of the initial information of the first media content, to obtain the first digital signature;
encapsulating at least the first encapsulated data, the second encapsulated data, and the first digital signature to obtain a trust declaration; and
obtaining the metadata of the first media content based on at least the trust declaration.

For example, generating the metadata of the first media content includes:
obtaining the initial information of the first media content and the first media hash value;
encapsulating at least the initial information of the first media content and the first media hash value to obtain first encapsulated data (Trust Indicators);
digitally signing the first data to obtain the first digital signature, where the first data is data determined based on at least the first media hash value and the initial information of the first media content;
encapsulating at least a trust indicator and a digital signature of the first combined hash value to obtain a trust declaration; and
obtaining the metadata of the first media content based on at least the trust declaration.

For example, the metadata may include data used to describe media content. For example, the metadata may include information that describes a property (property) of the media content. The metadata may be a trust profile (Trust Profile, where the trust profile may also be referred to as a trust manifest (Trust Manifest)). The trust profile may be used to record related information about generation and transition of the media content, and may be used for source tracing of the media content.

For example, the first media content may be media content without a trust profile, and the first media content includes but is not limited to an image, a graph, an audio, and a video.

For example, the first media content may be media content generated by a first electronic device, or may be media content received by a first electronic device from another electronic device. For example, if the first media content is an image, the first media content may be an image shot by the first electronic device, a screenshot, an AI generated image, or the like. A manner in which the first electronic device generates an image is not limited in this application. Alternatively, the first media content may be an image received by the first electronic device from the another electronic device. This is not limited in this application.

For example, hash calculation may be performed on the first media content by using a hash algorithm, to obtain the first media hash value. The hash algorithm used to calculate the first media hash value is not limited in this application.

For example, the hash algorithm may be used to perform hash calculation on the first media content and the initial information that are combined, to obtain the first combined hash value. In other words, the first combined hash value is a hash value obtained by combining the first media content and the initial information. The hash algorithm used to calculate the first combined hash value is not limited in this application. For example, when the initial information includes a plurality of types of information, the various types of initial information may be first combined and then combined with the first media hash value.

For example, the first combined hash value may be digitally signed by using a first private key, to obtain the digital signature of the first combined hash value. Specifically, the first combined hash value may be digitally signed by using a digital signature algorithm and the first private key, to obtain the digital signature of the first combined hash value. It should be understood that the digital signature algorithm used to calculate the digital signature of the first combined hash value is not limited in this application. The method in the first aspect may be applied to the first electronic device, and the first private key may be a private key of the first electronic device, that is, the first private key corresponds to the first electronic device. In another manner, the first private key may be a private key of a first user corresponding to the first electronic device, that is, the first private key corresponds to the first user.

According to a second aspect, an embodiment of this application provides a metadata generation method. The method includes: obtaining an (N+1)^{th} piece of media content, where the (N+1)^{th} piece of media content is obtained based on an N^{th} piece of media content; and generating metadata of the (N+1)^{th} piece of media content, where the metadata of the (N+1)^{th} piece of media content includes initial information of first media content and a digital signature of first data; and the metadata of the (N+1)^{th} piece of media content further includes N media hash values, where a first media hash value is a hash value of the first media content, an (N+1)^{th} media hash value is a hash value of the (N+1)^{th} piece of media content, the first data is data determined based on at least the initial information and the first media hash value, and N is a positive integer.

For example, the metadata generation method includes: first, obtaining the (N+1)^{th} piece of media content, where the (N+1)^{th} piece of media content is obtained based on the N^{th} piece of media content; and generating the metadata of the (N+1)^{th} piece of media content, where the metadata of the (N+1)^{th} piece of media content includes the initial information of the first media content, a first combined hash value, and a digital signature of the first combined hash value, the metadata of the (N+1)^{th} piece of media content further includes N+1 media hash values, the (N+1)^{th} media hash value is the hash value of the (N+1)^{th} piece of media content, the first combined hash value is determined based on the initial information and the first media hash value, the first media hash value is the hash value of the first media content, and N is a positive integer.

The (N+1)^{th} piece of media content may include media content obtained by performing editing processing on the N^{th} piece of media content, or media content obtained by modifying metadata of the N^{th} piece of media content, or a to-be-forwarded (or to-be-shared) N^{th} piece of media content. It should be understood that N^{th} does not constitute a limitation on a specific quantity, but is merely for ease of differentiation.

To be specific, after editing processing is performed on the N^{th} piece of media content, or after the metadata of the N^{th} piece of media content is modified, or in a process of forwarding the N^{th} piece of media content, the metadata of the (N+1)^{th} piece of media content may be generated based on the metadata of the N^{th} piece of media content. In this way, a transition process of the media content may be recorded in the metadata, to ensure that source tracing of the media content is implemented by verifying the metadata of the media content.

For example, the (N+1)^{th} media hash value is the hash value of the (N+1)^{th} piece of media content, an N^{th} media hash value is a hash value of the N^{th} piece of media content, an (N-1)^{th} media hash value is a hash value of an (N-1)^{th} piece of media content, and so on.

For example, hash calculation may be performed on the (N+1)^{th} piece of media content by using a hash algorithm, to obtain the (N+1)^{th} media hash value. The hash algorithm used to calculate the (N+1)^{th} media hash value is not limited in this application.

According to the second aspect, the metadata of the (N+1)^{th} piece of media content further includes N combined hash values and digital signatures of the N combined hash values, where an (N+1)^{th} combined hash value is determined based on an N^{th} combined hash value and the (N+1)^{th} media hash value. In this way, the N^{th} combined hash value and the (N+1)^{th} media hash value may be associated with each other, to prevent some information in the metadata from being forged.

According to the second aspect, the metadata of the (N+1)^{th} piece of media content further includes N combined hash values and digital signatures of the N combined hash values, where an (N+1)^{th} combined hash value is determined based on an N^{th} combined hash value, a digital signature of the N^{th} combined hash value, and the (N+1)^{th} media hash value. This can prevent some information in the metadata from being forged.

According to the second aspect or any one of the foregoing implementations of the second aspect, the metadata of the (N+1)^{th} piece of media content further includes one or more (N+1)^{th} media claims and one or more (N+1)^{th} claim hash values, where an (N+1)^{th} media claim is a claim of the (N+1)^{th} piece of media content, and an (N+1)^{th} claim hash value is a hash value of the (N+1)^{th} media claim.

For example, the claim may include but is not limited to: copyright information, a thumbnail, whether modification is possible, operation permission, use permission, a source of the (N+1)^{th} piece of media content, editing information, and the like.

It should be understood that the (N+1)^{th} media claim and the (N+1)^{th} claim hash value are optional information. In other words, in a process of generating the metadata, the (N+1)^{th} piece of media content may be declared, or the (N+1)^{th} piece of media content may not be declared. This can improve flexibility and backward compatibility of the metadata.

According to the second aspect or any one of the foregoing implementations of the second aspect, the (N+1)^{th} combined hash value is further determined based on the one or more (N+1)^{th} claim hash values. In other words, the (N+1)^{th} combined hash value may be determined based on the N^{th} combined hash value, the (N+1)^{th} media hash value, and the one or more (N+1)^{th} claim hash values. In this way, the N^{th} combined hash value, the (N+1)^{th} media hash value, and the one or more (N+1)^{th} claim hash values may be associated with each other, to prevent some information in the metadata from being forged.

According to the second aspect or any one of the foregoing implementations of the second aspect, hash calculation is performed by concatenating one or more hash values in the N^{th} combined hash value, the one or more (N+1)^{th} claim hash values, and the (N+1)^{th} media hash value, to obtain an intermediate hash value, where the intermediate hash value is used to determine the (N+1)^{th} combined hash value.

When the intermediate hash value is obtained by performing hash calculation by concatenating all hash values in the N^{th} combined hash value, the one or more (N+1)^{th} claim hash values, and the (N+1)^{th} media hash value, the intermediate hash value may be used as the (N+1)^{th} combined hash value.

When the intermediate hash value is obtained by performing hash calculation by concatenating some hash values in the N^{th} combined hash value, the one or more (N+1)^{th} claim hash values, and the (N+1)^{th} media hash value, hash calculation may be performed based on the intermediate hash value and other hash values in the N^{th} combined hash value, the one or more (N+1)^{th} claim hash values, and the (N+1)^{th} media hash value, to obtain the (N+1)^{th} combined hash value.

According to the second aspect or any one of the foregoing implementations of the second aspect, hash calculation is performed by concatenating one or more hash values in the N^{th} combined hash value, the digital signature of the N^{th} combined hash value, the one or more (N+1)^{th} claim hash values, and the (N+1)^{th} media hash value, to obtain an intermediate hash value, where the intermediate hash value is used to determine the (N+1)^{th} combined hash value.

When the intermediate hash value is obtained by performing hash calculation by concatenating all hash values in the N^{th} combined hash value, the digital signature of the N^{th} combined hash value, the one or more (N+1)^{th} claim hash values, and the (N+1)^{th} media hash value, the intermediate hash value may be used as the (N+1)^{th} combined hash value.

When the intermediate hash value is obtained by performing hash calculation by concatenating some hash values in the N^{th} combined hash value, the digital signature of the N^{th} combined hash value, the one or more (N+1)^{th} claim hash values, and the (N+1)^{th} media hash value, hash calculation may be performed based on the intermediate hash value and other hash values in the N^{th} combined hash value, the one or more (N+1)^{th} claim hash values, and the (N+1)^{th} media hash value, to obtain the (N+1)^{th} combined hash value.

It should be understood that the hash algorithm used to calculate the (N+1)^{th} combined hash value is not limited in this application.

According to the second aspect or any one of the foregoing implementations of the second aspect, the (N+1)^{th} combined hash value is obtained by performing hash calculation on the N^{th} combined hash value, the (N+1)^{th} media hash value, and the one or more (N+1)^{th} claim hash values by using a hash tree. The hash tree includes a root node and a leaf node. The (N+1)^{th} combined hash value is a value of the root node of the hash tree. The N^{th} combined hash value, the (N+1)^{th} media hash value, and the one or more (N+1)^{th} claim hash values are values of leaf nodes of the hash tree respectively.

According to the second aspect or any one of the foregoing implementations of the second aspect, the (N+1)^{th} combined hash value is obtained by performing hash calculation on the N^{th} combined hash value, the digital signature of the N^{th} combined hash value, the (N+1)^{th} media hash value, and the one or more (N+1)^{th} claim hash values by using a hash tree. The hash tree includes a root node and a leaf node. The (N+1)^{th} combined hash value is a value of the root node of the hash tree. The N^{th} combined hash value, the digital signature of the N^{th} combined hash value, the (N+1)^{th} media hash value, and the one or more (N+1)^{th} claim hash values are values of leaf nodes of the hash tree respectively.

For example, the hash tree is a data structure.

According to the second aspect or any one of the foregoing implementations of the second aspect, the (N+1)^{th} combined hash value is obtained by performing hash calculation on the N^{th} combined hash value, the (N+1)^{th} media hash value, and the one or more (N+1)^{th} claim hash values by using a hash tree. The hash tree includes a left subtree and a right subtree. The (N+1)^{th} combined hash value is a value of a root node of the hash tree. The N^{th} combined hash value is a value of a root node of the left subtree. The (N+1)^{th} media hash value and the one or more (N+1)^{th} claim hash values are values of leaf nodes of the right subtree respectively.

According to the second aspect or any one of the foregoing implementations of the second aspect, the (N+1)^{th} combined hash value is obtained by performing hash calculation on the N^{th} combined hash value, the digital signature of the N^{th} combined hash value, the (N+1)^{th} media hash value, and the one or more (N+1)^{th} claim hash values by using a hash tree. The hash tree includes a left subtree and a right subtree. The (N+1)^{th} combined hash value is a value of a root node of the hash tree. The N^{th} combined hash value and the digital signature of the N^{th} combined hash value are values of child nodes of the root node of the left subtree respectively. The (N+1)^{th} media hash value and the one or more (N+1)^{th} claim hash values are values of leaf nodes of the right subtree respectively.

According to the second aspect or any one of the foregoing implementations of the second aspect, the hash tree is the Merkle tree (Merkle Tree). In this way, when a data amount of the metadata is large, the Merkle tree may be pruned, to reduce a memory occupied by the metadata.

It should be understood that the hash tree may further include but is not limited to a binary tree, a triple tree, and the like. This is not limited in this application.

According to the second aspect or any one of the foregoing implementations of the second aspect, a digital signature of the (N+1)^{th} combined hash value is obtained by digitally signing the (N+1)^{th} combined hash value by using an (N+1)^{th} private key.

For example, the (N+1)^{th} combined hash value may be digitally signed by using the (N+1)^{th} private key, to obtain the digital signature of the (N+1)^{th} combined hash value. Specifically, the (N+1)^{th} combined hash value may be digitally signed by using a digital signature algorithm and the (N+1)^{th} private key, to obtain the digital signature of the (N+1)^{th} combined hash value. It should be understood that the digital signature algorithm used to calculate the digital signature of the (N+1)^{th} combined hash value is not limited in this application. The second aspect and any one of the implementations of the second aspect may be applied to an (N+1)^{th} electronic device, and the (N+1)^{th} private key may be a private key of the (N+1)^{th} electronic device, that is, the (N+1)^{th} private key corresponds to the (N+1)^{th} electronic device. In another manner, the (N+1)^{th} private key may be a private key of an (N+1)^{th} user corresponding to the (N+1)^{th} electronic device, that is, the (N+1)^{th} private key corresponds to the (N+1)^{th} user.

Certainly, the second aspect and any one of the implementations of the second aspect may be applied to a first electronic device, and the (N+1)^{th} private key may be a private key of the first electronic device, that is, the (N+1)^{th} private key corresponds to the first electronic device. In another manner, the (N+1)^{th} private key may be a private key of a first user corresponding to the first electronic device, that is, the (N+1)^{th} private key corresponds to the first user.

It should be noted that any two of N+1 private keys may be the same or may be different, and may be specifically determined based on a user and an electronic device that generate metadata. This is not limited in this application.

According to the second aspect or any one of the foregoing implementations of the second aspect, the method further includes obtaining a trust declaration (Trust Declaration) based on the initial information, the first media hash value, the first combined hash value, and the digital signature of the first combined hash value. This facilitates metadata management and storage, and can also improve verification efficiency in a subsequent verification process.

For example, the initial information, the first media hash value, the first combined hash value, and the digital signature of the first combined hash value may be encapsulated, to obtain the trust declaration.

According to the second aspect or any one of the foregoing implementations of the second aspect, a trust record (Trust Record) is obtained based on the (N+1)^{th} media hash value, the (N+1)^{th} combined hash value, and the digital signature of the (N+1)^{th} combined hash value. This facilitates metadata management and storage, and can also improve verification efficiency in a subsequent verification process.

For example, the (N+1)^{th} media hash value, the (N+1)^{th} combined hash value, and the digital signature of the (N+1)^{th} combined hash value are encapsulated to obtain the trust record.

According to the second aspect or any one of the foregoing implementations of the second aspect, the method further includes obtaining a trust profile (Trust Profile) of the (N+1)^{th} piece of media content based on the trust declaration and the trust record.

For example, the trust declaration and the trust record may be encapsulated to obtain the trust profile of the (N+1)^{th} piece of media content.

According to the second aspect or any one of the foregoing implementations of the second aspect, the initial information of the first media content includes at least one of the following: generation time of the first media content, an author name of the first media content, a digital content identifier of the first media content, a generation location of the first media content, information about a device of generating the first media content, a resolution of the first media content, a size of the first media content, a media type of the first media content, or a generation manner of the first media content.

It should be understood that the initial information may further include other information. This is not limited in this application.

According to the second aspect, the metadata of the (N+1)^{th} piece of media content further includes an (N+1)^{th} claim.

According to the second aspect, the metadata of the (N+1)^{th} piece of media content further includes a hash value of the (N+1)^{th} media hash value and a hash value of the (N+1)^{th} claim.

According to the second aspect, the metadata of the (N+1)^{th} piece of media content further includes N digital signatures, an (N+1)^{th} digital signature is a digital signature of an (N+1)^{th} piece of data, and the (N+1)^{th} piece of data is data determined based on at least the (N+1)^{th} claim and the (N+1)^{th} media hash value.

According to the second aspect, the (N+1)^{th} piece of data is a hash value determined based on at least the (N+1)^{th} claim and the (N+1)^{th} media hash value.

According to the second aspect, the (N+1)^{th} piece of data is a hash value determined based on at least a hash value of the (N+1)^{th} claim and a hash value of the (N+1)^{th} media hash value, or the (N+1)^{th} piece of data is a hash value of data obtained by combining at least the (N+1)^{th} claim and the (N+1)^{th} media hash value.

According to the second aspect, the metadata of the (N+1)^{th} piece of media content further includes an (N+1)^{th} uniform resource locator (URL), and the (N+1)^{th} URL indicates a location, of an (N+1)^{th} claim and the (N+1)^{th} media hash value, in the metadata of the (N+1)^{th} piece of media content.

According to the second aspect, an (N+1)^{th} piece of data is a hash value of data obtained by combining at least a hash value of the (N+1)^{th} claim, a hash value of the (N+1)^{th} media hash value, and the (N+1)^{th} URL.

According to a third aspect, an embodiment of this application provides a verification method. The method includes: first obtaining metadata of first media content, where the metadata includes initial information of the first media content, a first media hash value, a first combined hash value, and a digital signature of the first combined hash value, the first media hash value is a hash value of the first media content, and the first combined hash value is determined based on the initial information and the first media hash value; and then verifying the metadata of the first media content.

For example, the first media hash value, the first combined hash value, and the digital signature of the first combined hash value may be separately verified. When verification of at least one of the first media hash value, the first combined hash value, and the digital signature of the first combined hash value fails, it may be determined that the metadata of the first media content is false. In this case, a user may further determine authenticity of the first media content, or determine that content in the first media content is false. This is not limited in this application. When verification of the first media hash value, the first combined hash value, and the digital signature of the first combined hash value all succeeds, it may indicate that the metadata of the first media content is true. In this case, the user may further determine authenticity of the first media content, or determine that content in the first media content is true. This is not limited in this application.

According to a fourth aspect, an embodiment of this application provides a verification method. The method includes: first obtaining metadata of an (N+1)^{th} piece of media content, where the metadata of the (N+1)^{th} piece of media content includes initial information of first media content, a first combined hash value, and a digital signature of the first combined hash value; and the metadata of the (N+1)^{th} piece of media content further includes N+1 media hash values, where an (N+1)^{th} media hash value is a hash value of the (N+1)^{th} piece of media content, the first combined hash value is determined based on the initial information and the first media hash value, the first media hash value is a hash value of the first media content, and N is a positive integer; and then, verifying the metadata of the (N+1)^{th} piece of media content.

For example, the N+1 media hash values, the first combined hash value, and the digital signature of the first combined hash value may be separately verified. When verification of at least one of the N+1 media hash values, the first combined hash value, and the digital signature of the first combined hash value fails, it may be determined that the metadata of the (N+1)^{th} piece of media content is false. In this case, a user may further determine authenticity of the (N+1)^{th} piece of media content, or determine that content in the (N+1)^{th} piece of media content is false. This is not limited in this application. When verification of the N+1 media hash values, the first combined hash value, and the digital signature of the first combined hash value all succeeds, it may indicate that the metadata of the (N+1)^{th} piece of media content is true. In this case, a user may further determine authenticity of the (N+1)^{th} piece of media content, or determine that content in the (N+1)^{th} piece of media content is true. This is not limited in this application.

According to a fifth aspect, an embodiment of this application provides a metadata generation apparatus. The apparatus includes:
a first data obtaining module, configured to obtain first media content; and
a first information generation module, configured to generate metadata of the first media content, where the metadata of the first media content includes initial information of the first media content, a first media hash value, a first combined hash value, and a digital signature of the first combined hash value, the first media hash value is a hash value of the first media content, and the first combined hash value is a hash value obtained by combining the initial information and the first media hash value.

For example, the metadata generation apparatus may further include:
a first hash calculation module, configured to perform hash calculation on the first media content to obtain the first media hash value.

For example, the first hash calculation module is further configured to perform hash calculation on the initial information and the first media hash value that are combined, to obtain the first combined hash value.

For example, the metadata generation apparatus may further include:
a first encapsulation module, configured to obtain a trust declaration based on the initial information of the first media content, the first media hash value, the first combined hash value, and the digital signature of the first combined hash value.

The fifth aspect and any one of the implementations of the fifth aspect correspond to the first aspect and any one of the implementations of the first aspect respectively. For technical effects corresponding to the fifth aspect and any one of the implementations of the fifth aspect, refer to technical effects corresponding to the first aspect and any one of the implementations of the first aspect. Details are not described herein again.

According to a sixth aspect, an embodiment of this application provides a metadata generation apparatus. The apparatus includes:
a second data obtaining module, configured to obtain an (N+1)^{th} piece of media content, where the (N+1)^{th} piece of media content is obtained based on an N^{th} piece of media content; and
a second information generation module, configured to generate metadata of the (N+1)^{th} piece of media content, where the metadata of the (N+1)^{th} piece of media content includes initial information of first media content, a first combined hash value, and a digital signature of the first combined hash value, and the first combined hash value is a hash value obtained by combining the initial information and a first media hash value; and the metadata of the (N+1)^{th} piece of media content further includes N+1 media hash values, where an (N+1)^{th} media hash value is a hash value of the (N+1)^{th} piece of media content, the first media hash value is a hash value of the first media content, and N is a positive integer.

For example, the metadata generation apparatus may further include:
a second hash calculation module, configured to perform hash calculation by concatenating one or more hash values in an N^{th} combined hash value, one or more (N+1)^{th} claim hash values, and the (N+1)^{th} media hash value, to obtain an intermediate hash value, where the intermediate hash value is used to determine an (N+1)^{th} combined hash value.

For example, the second hash calculation module is further configured to determine the (N+1)^{th} combined hash value based on the intermediate hash value.

For example, the second hash calculation module is further configured to perform hash calculation on the (N+1)^{th} piece of media content to obtain the (N+1)^{th} media hash value.

For example, the metadata generation apparatus may further include:
a second encapsulation module, configured to obtain a trust declaration based on the initial information, the first media hash value, the first combined hash value, and the digital signature of the first combined hash value.

For example, the second encapsulation module is further configured to obtain a trust record based on the (N+1)^{th} media hash value, the (N+1)^{th} combined hash value, and a digital signature of the (N+1)^{th} combined hash value.

For example, the second encapsulation module is further configured to obtain a trust profile of the (N+1)^{th} piece of media content based on the trust declaration and the trust record.

It should be understood that the metadata generation apparatus in the sixth aspect may perform steps in the second aspect and any one of the implementations of the second aspect. Details are not described herein again.

The sixth aspect and any one of the implementations of the sixth aspect correspond to the second aspect and any one of the implementations of the second aspect respectively. For technical effects corresponding to the sixth aspect and any one of the implementations of the sixth aspect, refer to technical effects corresponding to the second aspect and any one of the implementations of the second aspect. Details are not described herein again.

It should be noted that, when the metadata generation apparatus in the fifth aspect and the metadata generation apparatus in the sixth aspect belong to a same electronic device, the metadata generation apparatus in the fifth aspect and the metadata generation apparatus in the sixth aspect are a same apparatus. In this case, the first data obtaining module and the second data obtaining module are a same module, the first information generation module and the second information generation module are a same module, the first hash calculation module and the second hash calculation module are a same module, and the first encapsulation module and the second encapsulation module are a same module.

When the metadata generation apparatus in the fifth aspect and the metadata generation apparatus in the sixth aspect belong to different electronic devices, the metadata generation apparatus in the fifth aspect and the metadata generation apparatus in the sixth aspect are two different apparatuses. In this case, the first data obtaining module and the second data obtaining module are two different modules, the first information generation module and the second information generation module are two different modules, the first hash calculation module and the second hash calculation module are two different modules, and the first encapsulation module and the second encapsulation module are two different modules.

According to a seventh aspect, an embodiment of this application provides a verification apparatus. The apparatus includes:
a first information obtaining module, configured to obtain metadata of first media content, where the metadata includes initial information of the first media content, a first media hash value, a first combined hash value, and a digital signature of the first combined hash value, the first media hash value is a hash value of the first media content, and the first combined hash value is a hash value obtained by combining the initial information and the first media hash value; and
a first verification module, configured to verify the metadata of the first media content.

According to an eighth aspect, an embodiment of this application provides a meta verification apparatus. The apparatus includes:
a second information obtaining module, configured to obtain metadata of an (N+1)^{th} piece of media content, where the (N+1)^{th} piece of media content is obtained based on an N^{th} piece of media content, the metadata of the (N+1)^{th} piece of media content includes initial information of first media content, a first combined hash value, and a digital signature of the first combined hash value, the first combined hash value is a hash value obtained by combining the initial information and a first media hash value, the metadata of the (N+1)^{th} piece of media content further includes N+1 media hash values, an (N+1)^{th} media hash value is a hash value of the (N+1)^{th} piece of media content, the first media hash value is a hash value of the first media content, and N is a positive integer; and
a second verification module, configured to verify the metadata of the (N+1)^{th} piece of media content.

It should be noted that, when the verification apparatus in the seventh aspect and the verification apparatus in the eighth aspect belong to a same electronic device, the verification apparatus in the seventh aspect and the verification apparatus in the eighth aspect are a same apparatus. In this case, the first information obtaining module and the second information obtaining module are a same module, and the first verification module and the second verification module are a same module. When the verification apparatus in the seventh aspect and the verification apparatus in the eighth aspect belong to two different electronic devices, the verification apparatus in the seventh aspect and the verification apparatus in the eighth aspect are two different apparatuses. In this case, the first information obtaining module and the second information obtaining module are two different modules, and the first verification module and the second verification module are two different modules.

According to a ninth aspect, an embodiment of this application provides an electronic device, including a memory and a processor, where the memory is coupled to the processor; and the memory stores program instructions, and when the program instructions are executed by the processor, the electronic device is caused to perform the metadata generation method according to the first aspect or any one of the possible implementations of the first aspect.

The ninth aspect and any one of the implementations of the ninth aspect correspond to the first aspect and any one of the implementations of the first aspect respectively. For technical effects corresponding to the ninth aspect and any one of the implementations of the ninth aspect, refer to the technical effects corresponding to the first aspect and any one of the implementations of the first aspect. Details are not described herein again.

According to a tenth aspect, an embodiment of this application provides an electronic device, including a memory and a processor, where the memory is coupled to the processor; and the memory stores program instructions, and when the program instructions are executed by the processor, the electronic device is caused to perform the metadata generation method according to the second aspect or any one of the possible implementations of the second aspect.

The tenth aspect and any one of the implementations of the tenth aspect correspond to the second aspect and any one of the implementations of the second aspect respectively. For technical effects corresponding to the tenth aspect and any one of the implementations of the tenth aspect, refer to the technical effects corresponding to the second aspect and any one of the implementations of the second aspect. Details are not described herein again.

According to an eleventh aspect, an embodiment of this application provides an electronic device, including a memory and a processor, where the memory is coupled to the processor; and the memory stores program instructions, and when the program instructions are executed by the processor, the electronic device is caused to perform the verification method according to the third aspect or any one of the possible implementations of the third aspect.

The eleventh aspect and any one of the implementations of the eleventh aspect correspond to the third aspect and any one of the implementations of the third aspect respectively. For technical effects corresponding to the eleventh aspect and any one of the implementations of the eleventh aspect, refer to the technical effects corresponding to the third aspect and any one of the implementations of the third aspect. Details are not described herein again.

According to a twelfth aspect, an embodiment of this application provides an electronic device, including a memory and a processor, where the memory is coupled to the processor; and the memory stores program instructions, and when the program instructions are executed by the processor, the electronic device is caused to perform the verification method according to the fourth aspect or any one of the possible implementations of the fourth aspect.

The twelfth aspect and any one of the implementations of the twelfth aspect correspond to the fourth aspect and any one of the implementations of the fourth aspect respectively. For technical effects corresponding to the twelfth aspect and any one of the implementations of the twelfth aspect, refer to the technical effects corresponding to the fourth aspect and any one of the implementations of the fourth aspect. Details are not described herein again.

According to a thirteenth aspect, an embodiment of this application provides a chip, including one or more interface circuits and one or more processors, where the one or more processors receives/receive or sends/send data through the one or more interface circuits, and when the one or more processors executes/execute computer instructions, an electronic device is caused to perform the metadata generation method according to the first aspect or any one of the possible implementations of the first aspect, or an electronic device is caused to perform the metadata generation method according to the second aspect or any one of the possible implementations of the second aspect, or an electronic device is caused to perform the verification method according to the third aspect or any one of the possible implementations of the third aspect, or an electronic device is caused to perform the verification method according to the fourth aspect or any one of the possible implementations of the fourth aspect.

The thirteenth aspect and any one of the implementations of the thirteenth aspect correspond to the first aspect and any one of the implementations of the first aspect respectively, or correspond to the second aspect and any one of the implementations of the second aspect respectively, or correspond to the third aspect and any one of the implementations of the third aspect respectively, or correspond to the fourth aspect and any one of the implementations of the fourth aspect respectively. For technical effects corresponding to the thirteenth aspect and any one of the implementations of the thirteenth aspect, refer to the technical effects corresponding to the first aspect and any one of the implementations of the first aspect, or refer to the technical effects corresponding to the second aspect and any one of the implementations of the second aspect, or refer to the technical effects corresponding to the third aspect and any one of the implementations of the third aspect, or refer to the technical effects corresponding to the fourth aspect and any one of the implementations of the fourth aspect. Details are not described herein again.

According to a fourteenth aspect, an embodiment of this application provides a computer-readable storage medium, where the computer-readable storage medium stores a computer program, and when the computer program is run on a computer or a processor, an electronic device is caused to perform the metadata generation method according to the first aspect or any one of the possible implementations of the first aspect, or an electronic device is caused to perform the metadata generation method according to the second aspect or any one of the possible implementations of the second aspect, or an electronic device is caused to perform the verification method according to the third aspect or any one of the possible implementations of the third aspect, or an electronic device is caused to perform the verification method according to the fourth aspect or any one of the possible implementations of the fourth aspect.

The fourteenth aspect and any one of the implementations of the fourteenth aspect correspond to the first aspect and any one of the implementations of the first aspect respectively, or correspond to the second aspect and any one of the implementations of the second aspect respectively, or correspond to the third aspect and any one of the implementations of the third aspect respectively, or correspond to the fourth aspect and any one of the implementations of the fourth aspect respectively. For technical effects corresponding to the fourteenth aspect and any one of the implementations of the fourteenth aspect, refer to the technical effects corresponding to the first aspect and any one of the implementations of the first aspect, or refer to the technical effects corresponding to the second aspect and any one of the implementations of the second aspect, or refer to the technical effects corresponding to the third aspect and any one of the implementations of the third aspect, or refer to the technical effects corresponding to the fourth aspect and any one of the implementations of the fourth aspect. Details are not described herein again.

According to a fifteenth aspect, an embodiment of this application provides a computer program product, where the computer program product includes computer instructions, and when the computer instructions are executed by a computer or a processor, the computer or the processor is caused to perform the metadata generation method according to the first aspect or any one of the possible implementations of the first aspect, or the computer or the processor is caused to perform the metadata generation method according to the second aspect or any one of the possible implementations of the second aspect, or the computer or the processor is caused to perform the verification method according to the third aspect or any one of the possible implementations of the third aspect, or the computer or the processor is caused to perform the verification method according to the fourth aspect or any one of the possible implementations of the fourth aspect.

The fifteenth aspect and any one of the implementations of the fifteenth aspect correspond to the first aspect and any one of the implementations of the first aspect respectively, or correspond to the second aspect and any one of the implementations of the second aspect respectively, or correspond to the third aspect and any one of the implementations of the third aspect respectively, or correspond to the fourth aspect and any one of the implementations of the fourth aspect respectively. For technical effects corresponding to the fifteenth aspect and any one of the implementations of the fifteenth aspect, refer to the technical effects corresponding to the first aspect and any one of the implementations of the first aspect, or refer to the technical effects corresponding to the second aspect and any one of the implementations of the second aspect, or refer to the technical effects corresponding to the third aspect and any one of the implementations of the third aspect, or refer to the technical effects corresponding to the fourth aspect and any one of the implementations of the fourth aspect. Details are not described herein again.

### BRIEF DESCRIPTION OF DRAWINGS

FIG. 1(1) to FIG. 1(3) are diagrams of an example of an application scenario;
FIG. 2a is a diagram of an example of a metadata generation process;
FIG. 2b is a diagram of an example of a trust profile;
FIG. 2c is a diagram of an example of a metadata generation process;
FIG. 3a is a diagram of an example of a trust profile generation process;
FIG. 3b is a diagram of an example of a trust profile;
FIG. 3c is a diagram of an example of a trust profile;
FIG. 3d is a diagram of an example of a trust profile generation process;
FIG. 3e is a diagram of an example of a trust profile;
FIG. 4a is a diagram of an example of a metadata generation process;
FIG. 4b is a diagram of an example of a trust profile;
FIG. 4c is a diagram of an example of a metadata generation process;
FIG. 5a is a diagram of an example of a trust profile generation process;
FIG. 5b is a diagram of an example of a trust profile;
FIG. 5c is a diagram of an example of a trust profile;
FIG. 6a is a diagram of an example of a trust profile generation process;
FIG. 6b is a diagram of an example of a trust profile generation process;
FIG. 6c is a diagram of an example of a process of generating an (N+1)^{th} combined hash value;
FIG. 6d is a diagram of an example of a process of generating an (N+1)^{th} combined hash value;
FIG. 6e is a diagram of an example of a process of generating an (N+1)^{th} combined hash value;
FIG. 6f is a diagram of an example of a process of generating an (N+1)^{th} combined hash value;
FIG. 6g is a diagram of an example of a process of generating an (N+1)^{th} combined hash value;
FIG. 6h is a diagram of an example of a process of generating an (N+1)^{th} combined hash value;
FIG. 6i is a diagram of an example of a trust profile;
FIG. 6j is a diagram of an example of a trust profile;
FIG. 7a is a diagram of an example of a trust profile generation process;
FIG. 7b is a diagram of an example of a trust profile generation process;
FIG. 7c is a diagram of an example of a trust profile;
FIG. 8a is a diagram of an example of a trust profile generation process;
FIG. 8b is a diagram of an example of a trust profile generation process;
FIG. 8c is a diagram of an example of a trust profile;
FIG. 8d is a diagram of an example of a trust profile;
FIG. 9a is a diagram of an example of a verification process;
FIG. 9b is a diagram of an example of a verification process;
FIG. 10a is a diagram of an example of a verification process;
FIG. 10b-1 and FIG. 10-b2 are a diagram of an example of a verification process;
FIG. 10c-1 and FIG. 10c-2 are a diagram of an example of a verification process;
FIG. 10d-1 and FIG. 10d-2 are a diagram of an example of a verification process;
FIG. 10e-1 and FIG. 10e-2 are a diagram of an example of a verification process;

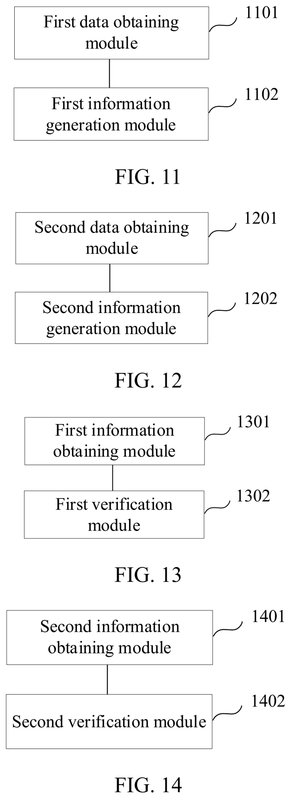

FIG. 11 is a diagram of an example of a metadata generation apparatus;
FIG. 12 is a diagram of an example of a metadata generation apparatus;
FIG. 13 is a diagram of an example of a verification apparatus;
FIG. 14 is a diagram of an example of a verification apparatus; and

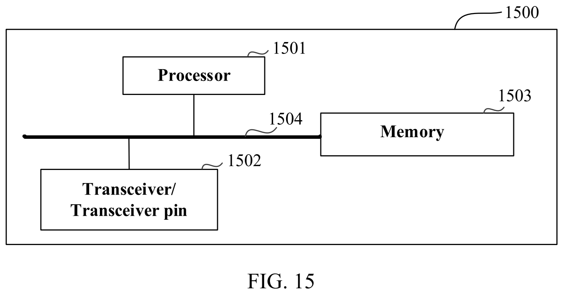

FIG. 15 is a diagram of an example of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims of embodiments of this application, the terms "N^{th}", "(N+1)^{th}", and the like are used for distinguishing between different objects but do not indicate a particular order of the objects, where N may be a positive integer such as 1, 2, 3, 4, ... For example, a first target object, a second target object, and the like are used for distinguishing between different target objects, but are not used for describing a specific order of the target objects.

In embodiments of this application, the word like "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In descriptions of embodiments of this application, unless otherwise stated, "a plurality of" means two or more. For example, a plurality of processing units mean two or more processing units, and a plurality of systems mean two or more systems.

For ease of understanding, some terms mentioned in embodiments of this application are first described.

### 1. Media asset (Media Asset)

The media asset may include media content (Media Content) and metadata (Metadata) of the media content. The metadata of the media content is bound to the media content, or the metadata of the media content is associated with the media content.

Generally, obtaining the media content means obtaining the media asset that includes the media content, and correspondingly the metadata of the media content is also obtained. For example, obtaining an image may be obtaining the image and metadata of the image.

It should be noted that, in some scenarios, the media asset is also referred to as a media file or digital asset (Media Asset). The media asset can be an image, an audio, a video, or a text.

### 2. Media content (Media Content)

The media content is also referred to as digital content (Digital content). The media content may be a part of media assets, and represents actual content of media. The digital content is content of different content types that exists in a digital form, such as a text, an image, and a sound, and may be stored on digital carriers such as optical discs and hard disk drives and transmitted through a network. The digital content is an overall product or service that integrates content such as an image, a text, an audio, and a video by using a digital technology, and is a product obtained by combining digital media technologies and cultural creativity. For example, the media content may be pixel data of an image, and any additional technical metadata (for example, color profiles or encoding parameters) required to understand or present the content.

A digital technology (Digital Technology) is a science and technology that coexists with electronic computers, and is a technology that uses specific devices to convert various information, including images, texts, sounds, and images, into binary digits "0" and "1" that can be identified by the electronic computers for computing, processing, storage, transmission, dissemination, and restoration. Because the computers are needed to encode, compress, and decode information in a calculation and storage process, the digital technology is also referred to as a digital control technology, a computer digital technology, and the like. The digital technology is also referred to as the digital control technology.

### 3. Metadata (Metadata)

The metadata may include data used to describe media content. For example, the metadata may include information that describes a property (property) of the media content. For example, the metadata may be a trust profile (or referred to as a trust manifest (Trust Manifest)). For example, the metadata may be a creation location, a creator, an annotation, or IPR information of the media content.

### 4. Trust profile (Trust Profile)

A trust profile of media content may be a type of metadata of the media content. The trust profile records related information about generation and transition of the media content, and may be used for source tracing of the media content.

### 5. Digital content identifier

The digital content identifier may be a digital object identifier (Digital Objects unique Identifier, DOI). The digital object identifier is a string of digits, letters, or other symbols, and is used to identify a digital content resource. The digital object identifier can be allocated to any digital entity that uses a network. As an identifier of a digital object, the DOI is unique and does not change once generated, and does not change with the change of attributes such as a copyright owner or a storage address of the digital object identified by the DOI. In traditional physical publications, books, periodicals, tapes, and optical discs are identified by international standards such as an ISBN (International Standard Book Number, international standard book number), an ISSN (International Standard Serial Number, international standard serial number), and ISRC (International Standard Recording Code, international standard recording code), and are attached to a physical cover in the form of bar codes as unique identifiers. These identifiers allow the publications to be managed effectively and conveniently, and facilitate search and use in all links. However, once a website address (URL (Uniform Resource Locator, uniform resource locator)) of an online document is changed, the document disappears and is untraceable. If digital information is added with a digital object identifier (DOI), it is just like a bar code on a publication, and can be found anywhere. Therefore, the digital object identifier (DOI) is also referred to as a digital resource "barcode".

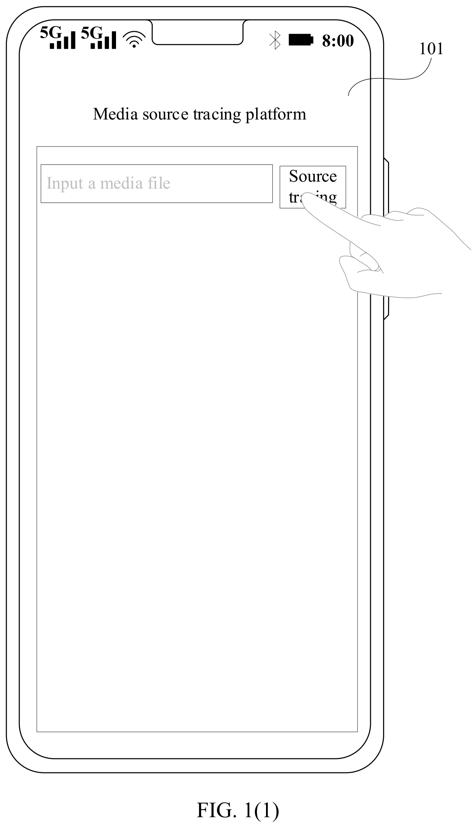

FIG. 1(1) to FIG. 1(3) are diagrams of an example of an application scenario.

When a user needs to perform source tracing on media content, or needs to determine authenticity of the media content (where source tracing of the media content may help determine authenticity of the media content to some extent), the user may open a client (for example, an application, an applet, or a web page) of a media source tracing platform in a terminal device to perform query.

For example, after a mobile phone A of a user A receives media content sent by a mobile phone B of a user B, if the user A needs to use the media content (for example, forwarding), the user A may first perform source tracing on the media content. After determining authenticity of the media content, the user A determines whether to use the media content.

It should be understood that the mobile phone A may alternatively be another electronic device with a strong computing capability, for example, a personal computer, a computer workstation, or a tablet computer. This is not limited in this application.

For example, when the user needs to determine authenticity of media content in a smartwatch, the user may send the media content in the smartwatch to the mobile phone, and the mobile phone performs source tracing on the media content and then sends a source tracing result to the smartwatch.

It should be understood that the smartwatch may alternatively be another electronic device with a weak computing capability, for example, a media consumption device, a wearable device, a set-top box, or a game console. This is not limited in this application. The mobile phone may alternatively be another electronic device with a strong computing capability, for example, a personal computer, a computer workstation, or a tablet computer. This is not limited in this application.

With reference to FIG. 1(1), a main interface 101 of the media source tracing platform may include one or more controls, including but not limited to an input box, a source tracing button, and the like. This is not limited in this application.

For example, the user may tap the input box, and the media source tracing platform may display a file selection interface in response to operation behavior of the user. Then, after selecting corresponding media content on the file selection interface, the user may tap the source tracing button on the main interface 101; and correspondingly the media source tracing platform may obtain a trust profile of the media content in response to operation behavior of the user, and then verify the trust profile.

For example, after completely verifying the trust profile, the media source tracing platform may display a verification result and display some information in the trust profile. The verification result includes that a source tracing verification succeeds and a source tracing verification fails.

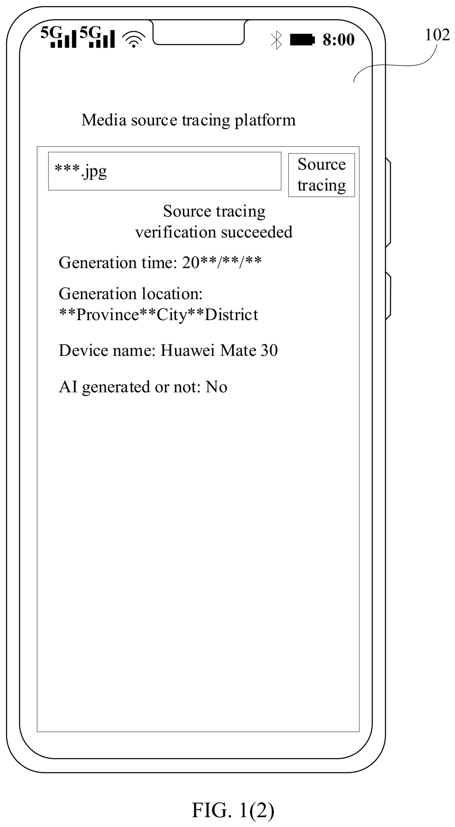

With reference to FIG. 1(2), the verification result displayed in FIG. 1(2) is that source tracing verification succeeds, and information about the displayed trust profile may include generation time of the media content, a generation location of the media content, a name of a device of generating the media content, and whether the media content is generated by AI.

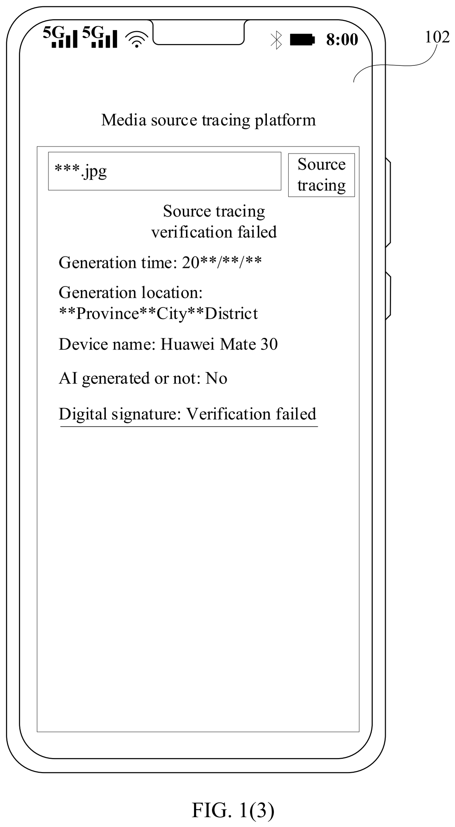

With reference to FIG. 1(3), the verification result displayed in FIG. 1(3) is that source tracing verification fails. When source tracing verification fails, information indicating that source tracing verification fails and information indicating that source tracing verification succeeds in the trust profile may be displayed separately. As shown in FIG. 1(3), the information indicating that source tracing verification succeeds in the trust profile may include generation time of the media content, a generation location of the media content, a name of a device of generating the media content, and whether the media content is generated by AI; and the information indicating that source tracing verification fails in the trust profile may be a digital signature.

In a possible manner, the client of the media source tracing platform may identify authenticity of the media content. For example, when authenticity of to-be-identified media content is one, the client of the media source tracing platform may perform identification locally.

In a possible manner, a server of the media source tracing platform may identify authenticity of the media content. For example, when there are a plurality of pieces of to-be-identified media content, the client of the media source tracing platform may send the plurality of pieces of to-be-identified media content to the server of the media source tracing platform, and the server of the media source tracing platform identifies authenticity of the media content and returns an identification result to the client of the media source tracing platform.

It should be noted that, in this application, whether the client of the media source tracing platform identifies authenticity of the media content or the server of the media source tracing platform identifies authenticity of the media content is not limited by a quantity of to-be-identified media content.

The following describes processes of generating and verifying the trust profile.

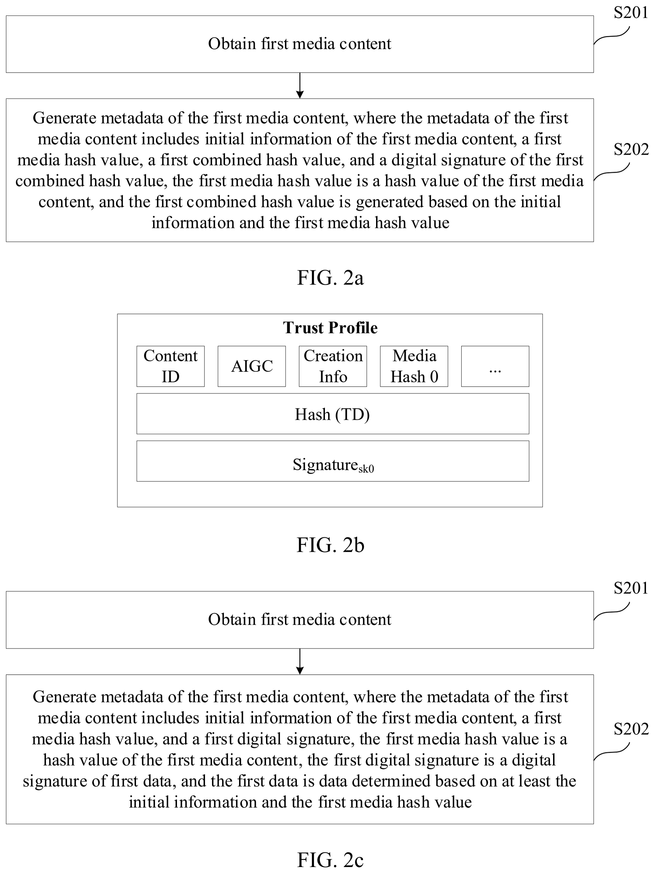

First, the process of generating the trust profile is described. For details, refer to embodiments in FIG. 2a to FIG. 8a.

FIG. 2a is a diagram of an example of a trust profile generation process. A first electronic device performs steps in the embodiment in FIG. 2a.

S201: Obtain first media content.

For example, the first media content may be media content without a trust profile. The first media content may be content of different content types that exists in a digital form, such as a text, an image, and a sound. For example, the first media content may be pixel data of an image, and any additional technical metadata (for example, a color profile or an encoding parameter) required for understanding or presenting the content.

For example, the first media content may be media content generated by the first electronic device, or may be media content received by the first electronic device from another electronic device. For example, if the first media content is an image, the first media content may be an image shot by the first electronic device, a screenshot, an AI generated image, or the like. A manner in which the first electronic device generates an image is not limited in this application. Alternatively, the first media content may be an image received by the first electronic device from another electronic device. This is not limited in this application.

For example, as shown in FIG. 2c, in S202, metadata of the first media content is generated, where the metadata of the first media content includes initial information of the first media content, a first media hash value, and a first digital signature, the first media hash value is a hash value of the first media content, the first digital signature is a digital signature of first data, and the first data is data determined based on at least the initial information and the first media hash value. It should be noted that, the first data is data that is optionally recorded in the metadata of the first media content. When the metadata of the first media content includes the first data, it can be convenient to verify a hash and a signature. When the metadata of the first media content does not include the first data, space can be saved.

For example, the first data is data obtained by combining at least the first media hash value and the initial information of the first media content, or the first data is data obtained by combining at least a hash value of the initial information and a hash value of the first media hash value.

For example, the first data may alternatively be a first combined hash value, and the first combined hash value includes a hash value obtained by combining the initial information of the first media content and the first media hash value. For example, the first combined hash value includes a hash value obtained by combining the initial information of the first media content, the first media hash value, and other descriptive information. The other descriptive information may not be other descriptive information in the initial information, for example, information about a tool for generating the trust profile or other information describing the initial information of the first media content. This is not limited in this application.

For example, the first data may alternatively be a first combined hash value, and the first combined hash value may include a hash value obtained by combining a hash value of the initial information of the first media content and a hash value (Media Hash 0. Hash) of the first media hash value. For example, the first combined hash value is a hash value obtained by combining the hash value of the initial information of the first media content, the hash value of the first media hash value, and hash values of other metadata information. Herein, in a case in which the first media content has at least two pieces of initial information, the hash value of the initial information of the first media content may include a hash value of each piece of the initial information of the first media content, or the hash value of the initial information of the first media content may include a hash value obtained by combining all the initial information of the first media content.

For example, the metadata of the first media content further includes the first data.

For example, as shown in FIG. 2a, in S202, metadata of the first media content is generated, where the metadata of the first media content includes initial information of the first media content, a first media hash value, a first combined hash value, and a digital signature of the first combined hash value, the first media hash value is a hash value of the first media content, and the first combined hash value is generated based on the initial information and the first media hash value. For example, the metadata that is of the first media content and that is generated in S202 may be a trust profile of the first media content.

For example, the metadata of the first media content may be obtained when the first media content is obtained. In this case, the obtained metadata of the first media content may include the initial information of the first media content, but does not include the trust profile of the first media content. In this application, S202 may be performed to generate the trust profile of the first media content, and the trust profile of the first media content is used as a type of metadata of the first media content.

The initial information of the first media content may be information generated when the first media content is generated. For example, the initial information of the first media content includes at least one of the following: generation time of the first media content, an author name of the first media content, a digital content identifier of the first media content, a generation location of the first media content, information about a device of generating the first media content, a resolution of the first media content, a size of the first media content, a media type of the first media content, or a generation manner of the first media content. For example, the information about the device of generating the first media content may include a model of the device, a parameter of a camera, and the like, and the parameter of the camera may include a focal length, photosensitivity, exposure, and the like for the camera to shoot a picture. It should be understood that the initial information of the first media content may further include other information such as copyright information that describes the first media content. This is not limited in this application.

For example, the media type may include but is not limited to an image type, a video type, an audio type, a graphics type, and the like. The generation manner may include an AI generation manner, a non-AI generation manner, and the like. In a possible manner, the generation manner in the initial information may be replaced with an AIGC identifier. For example, when the first media content is generated by AI, a value of the AIGC identifier is 1; or when the first media content is not generated by AI, a value of the AIGC identifier is 0. The author name of the first media content may be a name of a creator of the first media content or a name of a shooting device of the first media content. This is not limited in this application.

For example, when the first media content is media content generated by the first electronic device, the initial information of the first media content may be customized and input by a first user, or may be automatically generated by the first electronic device (without being input by the first user). For example, the first media hash value may be generated based on the first media content; then, the first combined hash value is generated based on at least the first media hash value and the initial information; then, the digital signature of the first combined hash value is generated; and then, the trust profile of the first media content is generated based on the initial information, the first media hash value, the first combined hash value, and the digital signature of the first combined hash value. FIG. 2b is a diagram of an example of a trust profile.

For example, as shown in FIG. 2b, the metadata of the first media content may include the initial information of the first media content, the first media hash value, and the digital signature of the first combined hash value. The initial information of the first media content may include a content ID (namely, the digital content identifier of the first media content), AIGC (namely, the AIGC identifier, indicating a generation manner of the first media content), and creation info (namely, creation information that may include the generation time of the first media content, the author name of the first media content, the generation location of the first media content, and the like).

In FIG. 2b, the trust profile of the first media content includes the content ID (namely, the digital content identifier of the first media content), the AIGC (namely, the AIGC identifier), the creation info (namely, the creation information that may include the generation time of the first media content, the author name of the first media content, the generation location of the first media content, and the like), a media hash 0 (namely, the first media hash value), a hash (TD) (namely, the first combined hash value), and Signatureₛₖ₀ (namely, the digital signature of the first combined hash value).

It should be understood that FIG. 2b is merely an example of the trust profile of the first media content in this application. Locations or an arrangement sequence of information in the trust profile of the first media content may be set as required. This is not limited in this application.

It should be noted that the first media hash value may be used to verify whether a trust profile is the trust profile of the first media content; the initial information may be used for initial identity certification of the first media content, and may serve as a one-dimension certificate of authenticity of the first media content; and the first combined hash value and the digital signature of the first combined hash value may be used to verify whether the initial information and the first media hash value are tampered with. In this way, the trust profile may be used for source tracing of the first media content.

It should be noted that a type of information included in the initial information may be determined based on a scenario, a media type, and the like. Types of information included in initial information corresponding to different scenarios and different media types may be different. This is not limited in this application. In other words, a type of information included in the initial information may be agreed in advance based on a scenario and a media type. This can improve readability of the trust profile.

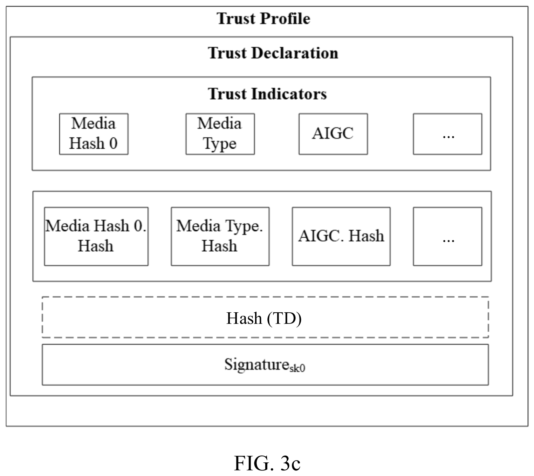

FIG. 3c is a diagram of an example of the trust profile.

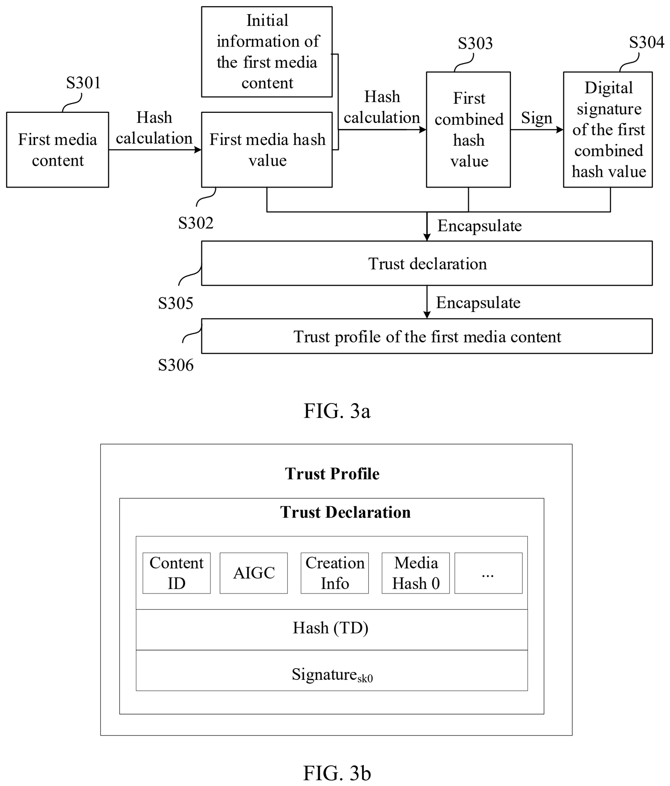

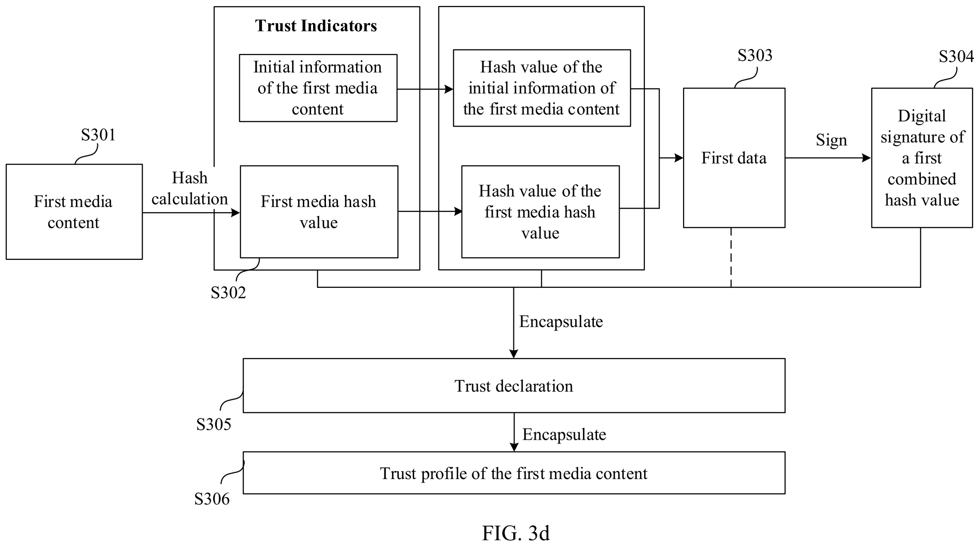

For example, as shown in FIG. 3c, the metadata of the first media content may further include a hash value of the initial information of the first media content and a hash value of the first media hash value. For example, the hash value of the initial information of the first media content may include a hash value of the media type of the first media content (Media Type. Hash), and a hash value of the generation manner of the first media content (for example, a hash value AIGC. Hash of an AIGC generation manner). FIG. 3a and FIG. 3d are diagrams of an example of a trust profile generation process. FIG. 3a specifically describes the trust profile generation process on the basis of FIG. 2a. FIG. 3d specifically describes the trust profile generation process on the basis of FIG. 3c. It should be understood that a hash algorithm used for hash calculation is not limited in this application.

S301: Obtain the first media content.

For example, for S301, refer to descriptions of S201. Details are not described herein again.

S302: Perform hash calculation on the first media content to obtain the first media hash value.

For example, hash calculation may be performed on the first media content according to the hash algorithm, to obtain the first media hash value. It should be understood that the hash algorithm used in S302 is not limited in this application.

For example, as shown in FIG. 3d, the initial information of the first media content and the first media hash value may be encapsulated together to obtain trust indicators (Trust Indicators). The trust indicators may be information about the first media content, and may be used to confirm authenticity of the first media content.

S303: Perform hash calculation based on at least the initial information of the first media content and the first media hash value to obtain a first combined hash value.

For example, in S303, hash calculation is performed based on the initial information of the first media content and the first media hash value to obtain the first combined hash value.

For example, the initial information of the first media content and the first media hash value may be combined (which may also be referred to as concatenation or cascading); and the hash algorithm may be used to perform hash calculation on the initial information of the first media content and the first media hash value that are combined, to obtain the first combined hash value. In other words, the first combined hash value is a hash value obtained by combining the initial information of the first media content and the first media hash value.

For example, as shown in FIG. 3d, hash calculation may be first performed on the initial information of the first media content and the first media content separately by using the hash algorithm, to obtain a hash value of the first media content and the hash value (Media Hash 0. Hash) of the first media hash value, and then the first combined hash value is obtained through calculation based on a combination of at least the hash value of the initial information of the first media content and the hash value (Media Hash 0. Hash) of the first media hash value.

For example, when the initial information includes a plurality of types of information, the various types of initial information may be first combined and then combined with the first media hash value.

It should be understood that the hash algorithm used in S303 is not limited in this application.

S304: Digitally sign the first combined hash value by using a first private key, to obtain a digital signature of the first combined hash value.

In a possible manner, the first private key may be a private key of the first user, that is, the first private key corresponds to the first user.

In a possible manner, the first private key may be a private key of the first electronic device, that is, the first private key corresponds to the first electronic device.

For example, the first combined hash value may be digitally signed by using a digital signature algorithm and the first private key, to obtain the digital signature of the first combined hash value. It should be understood that the digital signature algorithm used in S304 is not limited in this application.

S305: Encapsulate at least the initial information of the first media content, the first media hash value, and the digital signature of the first combined hash value, to obtain a trust declaration (Trust Declaration).

For example, as shown in FIG. 3a, at least the initial information of the first media content, the first media hash value, and the digital signature of the first combined hash value may be encapsulated to obtain the trust declaration (Trust Declaration).

For example, as shown in FIG. 3d, at least the trust indicators, the hash value of the initial information of the first media content, the hash value of the first media hash value, and the digital signature of the first combined hash value may be encapsulated together to obtain the trust declaration.

For example, as shown in FIG. 3a, at least the initial information of the first media content, the first media hash value, the first combined hash value, and the digital signature of the first combined hash value may be encapsulated together to obtain the trust declaration.

For example, as shown in FIG. 3d, at least the trust indicators, the hash value of the initial information of the first media content, the hash value of the first media hash value, the first combined hash value, and the digital signature of the first combined hash value may be encapsulated together to obtain the trust declaration.

S306: Encapsulate at least the trust declaration to obtain a trust profile of the first media content. The trust profile may further include other modification information, for example, a trust record (Trust Record or Trust Manifest).

FIG. 3b is a diagram of an example of the trust profile.

In FIG. 3b, the trust profile of the first media content may include the trust declaration, and the trust declaration may include initial information (including a content ID, AIGC, and creation info), a media hash 0, a hash (TD), and Signatureₛₖ₀. It should be noted that the hash (TD) in the trust profile of the first media content is optional data, that is, the trust profile of the first media content may include the trust declaration, and the trust declaration may include the initial information (including the content ID, the AIGC, and the creation info), the media hash 0, and Signatureₛₖ₀.

In FIG. 3b, various types of initial information and the media hash 0 may be encapsulated together. It should be understood that, in some possible manners, only various types of initial information are encapsulated together.

It should be understood that FIG. 3b is merely an example of this application. Locations or an arrangement sequence of the initial information (the content ID, the AIGC, and the creation info), the media hash 0, the hash (TD), and Signatureₛₖ₀ in the trust declaration may be set as required. This is not limited in this application.

FIG. 3c is a diagram of an example of the trust profile.

In FIG. 3c, the trust declaration may include trust indicators, the hash value (for example, Media Type. Hash and AIGC. Hash) of the initial information of the first media content, the hash value of the first media hash value, and Signatureₛₖ₀. The trust indicators may include the initial information (for example, a content ID, a media type, AIGC, creation info) and a media hash 0. For example, the trust declaration may further include a hash (TD).

For example, the hash value of the initial information of the first media content and the hash value of the first media hash value may be encapsulated together.

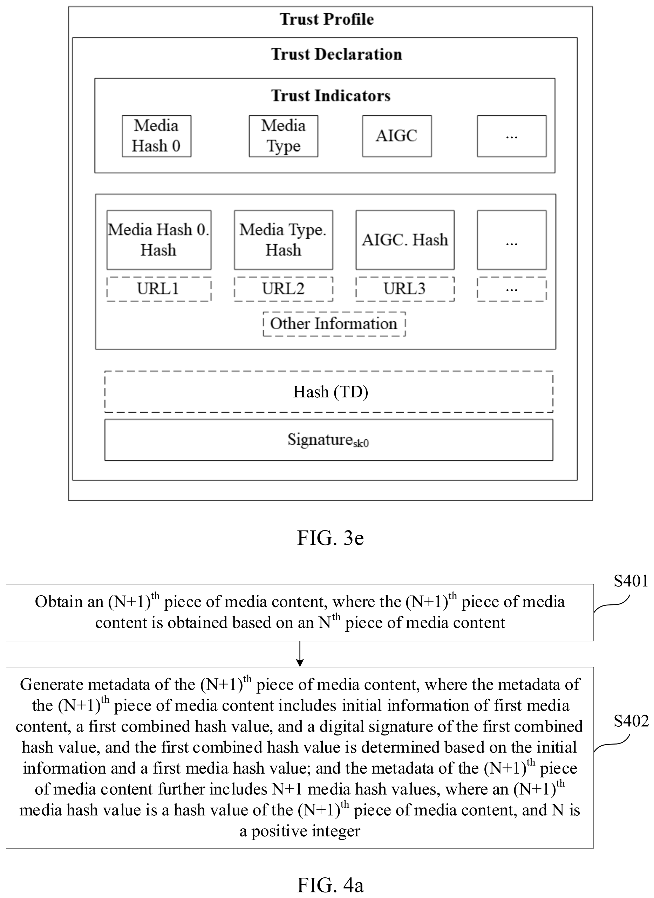

FIG. 3e is a diagram of an example of the trust profile.

For example, in FIG. 3e, the trust declaration may include trust indicators, the hash value (for example, Media Type. Hash and AIGC. Hash) of the initial information of the first media content, the hash value of the first media hash value, and Signatureₛₖ₀. For example, the trust declaration may further include the first combined hash value hash (TD).

For example, in FIG. 3e, the metadata of the first media content may further include a first uniform resource locator (URL, Uniform Resource Locator), and the first URL indicates a location of the initial information of the first media content or the first media hash value in the metadata of the first media content. For example, a URL 1 is the location of the first media hash value in the metadata of the first media content, a URL 2 is a location of the media type in the metadata of the first media content, and a URL 3 is a location of the AIGC in the metadata of the first media content.

For example, the hash value of the first media hash value, the hash value of the initial information of the first media content, and the first URL may be encapsulated together.

For example, the metadata of the first media content may further include other information, and the other information may be information that is not used to confirm authenticity of the first media content, for example, a file name and a name of the hash algorithm. The hash algorithm is used to calculate the hash value mentioned in the foregoing embodiment.

For example, the first combined hash value may be a hash value obtained by combining the hash value of the initial information of the first media content, the hash value of the first media hash value, and the first URL. For example, the first combined hash value may be a hash value obtained by combining the hash value of the initial information of the first media content, the hash value of the first media hash value, the first URL, and the other information.

In a possible scenario, after the first electronic device generates the trust profile of the first media content, the first user may perform an editing operation on the first media content in the first electronic device, or may not perform an editing operation on the first media content, but modify the metadata of the first media content (for example, add information to the trust profile of the first media content).

In a possible scenario, after the first electronic device generates the trust profile of the first media content, the first electronic device sends the first media content and the trust profile of the first media content to a second electronic device. In this way, a second user may perform an editing operation on the first media content in the second electronic device, or may not perform an editing operation on the first media content, but modify the metadata of the first media content (for example, add information to the trust profile of the first media content).

For example, media content obtained by performing editing processing on the first media content based on the editing operation, or media content obtained by modifying the metadata of the first media content, or to-be-forwarded (or to-be-shared) first media content may be referred to as second media content. Then, a trust profile of the second media content may be generated based on the trust profile of the first media content.

Similarly, after the second electronic device generates the trust profile of the second media content, the second user may perform an editing operation on the second media content in the second electronic device, or may not perform an editing operation on the second media content, but modify metadata of the second media content (for example, add information to the trust profile of the second media content).

In a possible scenario, after the second electronic device generates the trust profile of the second media content, the second electronic device sends the second media content and the trust profile of the second media content to a third electronic device. In this way, a third user may perform an editing operation on the second media content in the third electronic device, or may not perform an editing operation on the second media content, but modify metadata of the second media content (for example, add information to the trust profile of the second media content).

For example, media content obtained by performing editing processing on the second media content, or media content obtained by modifying the metadata of the second media content, or to-be-forwarded (or to-be-shared) second media content may be referred to as third media content. Then, a trust profile of the third media content may be generated based on the trust profile of the second media content.

By analogy, media content obtained by performing editing processing on an N^{th} piece of media content, or media content obtained by modifying metadata of the N^{th} piece of media content, or a to-be-forwarded (or to-be-shared) N^{th} piece of media content may be referred to as an (N+1)^{th} piece of media content. Then, a trust profile of the (N+1)^{th} piece of media content may be generated based on a trust profile of the N^{th} piece of media content. Refer to the following descriptions in embodiments in FIG. 4a to FIG. 8a.

It should be noted that, in the embodiments in FIG. 4a to FIG. 8a, when N=1, the first media content may be the first media content in the embodiment in FIG. 2a or the embodiment in FIG. 3a.

It should be understood that N^{th} does not constitute a limitation on a specific quantity, but is merely for ease of differentiation. In some possible cases, the N^{th} piece of media content and the (N+1)^{th} piece of media content may be media content generated in a chronological order. For example, when N=2, the third media content is generated after the second media content. In other words, in some possible cases, N^{th} and (N+1)^{th} may indicate a sequence. FIG. 4a is a diagram of an example of a trust profile generation process.

S401: Obtain an (N+1)^{th} piece of media content, where the (N+1)^{th} piece of media content is obtained based on an N^{th} piece of media content.

In a possible manner, when an N^{th} user expects to add information to a trust profile of the N^{th} piece of media content, the N^{th} user may enter, on an N^{th} electronic device, a trust profile adding interface corresponding to the N^{th} piece of media content. In this case, the N^{th} electronic device may obtain the N^{th} piece of media content as the (N+1)^{th} piece of media content (namely, the (N+1)^{th} piece of media content is the N^{th} piece of media content), and then perform S402.

In a possible manner, after the N^{th} user performs a forwarding operation on the N^{th} piece of media content, the N^{th} electronic device may obtain the N^{th} piece of media content as the (N+1)^{th} piece of media content, and then perform S402; and after a trust profile of the (N+1)^{th} piece of media content is generated, the N^{th} electronic device may forward the (N+1)^{th} piece of media content and the trust profile of the (N+1)^{th} piece of media content.

In a possible manner, when an (N+1)^{th} user expects to edit the N^{th} piece of media content, the user may enter an editing interface corresponding to the N^{th} piece of media content in an (N+1)^{th} electronic device, and then perform an editing operation. Correspondingly, the (N+1)^{th} electronic device may perform editing processing on the N^{th} piece of media content in response to the editing operation. After the (N+1)^{th} user completely edit the N^{th} piece of media content, the (N+1)^{th} electronic device may obtain the (N+1)^{th} piece of media content, that is, the (N+1)^{th} piece of media content is media content obtained by performing editing processing on the N^{th} piece of media content.

When the N^{th} piece of media content is an image/a video, the editing processing may include but is not limited to: cropping, rotation, color tuning, adding a text, deleting a text/target object, and the like. This is not limited in this application. When the N^{th} piece of media content is an audio, the editing processing may include but is not limited to: cropping, acceleration, deceleration, raising a pitch, lowering a pitch, and the like. This is not limited in this application. When the N^{th} piece of media content is a graph, the editing processing may include but is not limited to: cropping, rotation, color tuning, adding a line, and the like. This is not limited in this application. When the N^{th} piece of media content is a text, the editing processing may include but is not limited to: adding a text, deleting a text, changing a text sequence, changing a font size, and the like. This is not limited in this application.

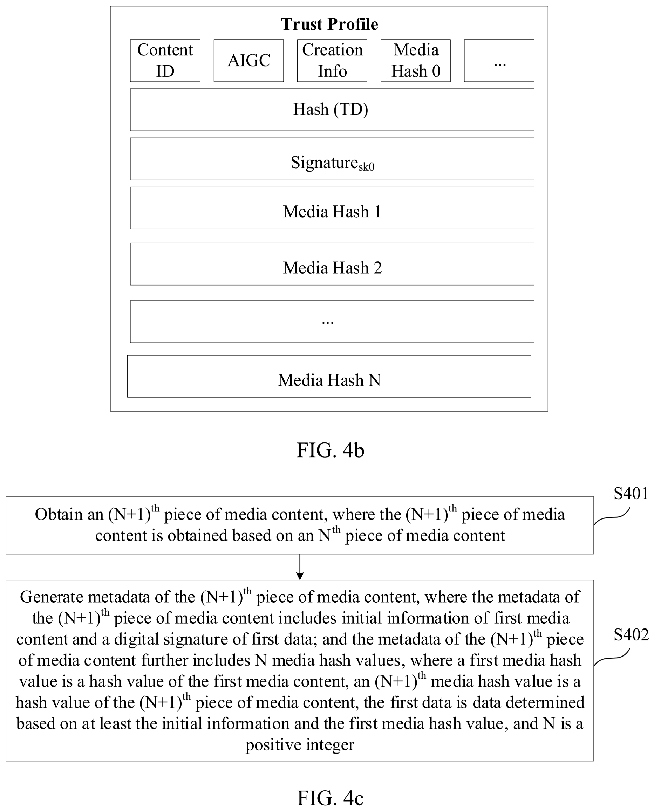

As shown in FIG. 4c, metadata of the (N+1)^{th} piece of media content is generated, where the metadata of the (N+1)^{th} piece of media content includes initial information of first media content and a digital signature of first data; and the metadata of the (N+1)^{th} piece of media content further includes N media hash values, where a first media hash value is a hash value of the first media content, an (N+1)^{th} media hash value is a hash value of the (N+1)^{th} piece of media content, the first data is data determined based on at least the initial information and the first media hash value, and N is a positive integer.

For example, in S402, the metadata of the (N+1)^{th} piece of media content is generated, where the metadata of the (N+1)^{th} piece of media content includes the initial information of the first media content and a digital signature of a first combined hash value; and the metadata of the (N+1)^{th} piece of media content further includes N+1 media hash values, where the first media hash value is the hash value of the first media content, the (N+1)^{th} media hash value is the hash value of the (N+1)^{th} piece of media content, the first combined hash value is determined based on the initial information and the first media hash value, and N is a positive integer.

For example, the metadata that is of the (N+1)^{th} piece of media content and that is generated in S402 may be the trust profile of the (N+1)^{th} piece of media content.

For example, the (N+1)^{th} electronic device/the N^{th} electronic device may generate the trust profile of the (N+1)^{th} piece of media content.

For example, hash calculation may be performed on the (N+1)^{th} piece of media content to obtain the (N+1)^{th} media hash value. Because the (N+1)^{th} electronic device may obtain the trust profile of the N^{th} piece of media content when obtaining the (N+1)^{th} piece of media content, the (N+1)^{th} electronic device may generate the trust profile of the (N+1)^{th} piece of media content based on the trust profile of the N^{th} piece of media content and the (N+1)^{th} media hash value.

It should be noted that the (N+1)^{th} electronic device performs S402 regardless of whether the N^{th} user performs an information adding operation on the trust profile adding interface corresponding to the N^{th} piece of media content.

It should be understood that, when N=1, it can be learned from descriptions of the embodiments in FIG. 2a and FIG. 3a that an obtained trust profile of the first media content includes one media hash value, namely, the first media hash value. A trust profile of second media content obtained by performing S402 may include two media hash values: a first media hash value and a second media hash value.

A trust profile of second media content obtained when N=2 includes two media hash values: a first media hash value and a second media hash value. A trust profile of third media content obtained by performing S402 may include three media hash values: a first media hash value, a second media hash value, and a third media hash value.

To be specific, the obtained trust profile of the N^{th} piece of media content may include the N media hash values, the generated trust profile of the (N+1)^{th} piece of media content may include the N+1 media hash values, and the (N+1)^{th} media hash value is the hash value of the (N+1)^{th} piece of media content.

It should be understood that when the (N+1)^{th} piece of media content is the N^{th} piece of media content, the (N+1)^{th} media hash value is the same as an N^{th} media hash value.

FIG. 4b is a diagram of an example of a trust profile.

For example, in FIG. 4b, a trust profile of an (N+1)^{th} piece of media content may include: a content ID (namely, a digital content identifier of first media content), AIGC (namely, an AIGC identifier), creation info (namely, creation information that may include generation time of the first media content, an author name of the first media content, a generation location of the first media content, and the like), a media hash 0 (namely, a first media hash value), Signatureₛₖ₀ (namely, a digital signature of a first combined hash value), a media hash 1 (namely, a second media hash value), a media hash 2 (namely, a third media hash value), ..., and a media hash N (namely, an (N+1)^{th} media hash value). For example, the trust profile of the (N+1)^{th} piece of media content may further include a hash (TD) (namely, the first combined hash value).

It should be understood that FIG. 4b is merely an example of this application, and locations or an arrangement sequence of various information in the trust profile may be set as required. This is not limited in this application.

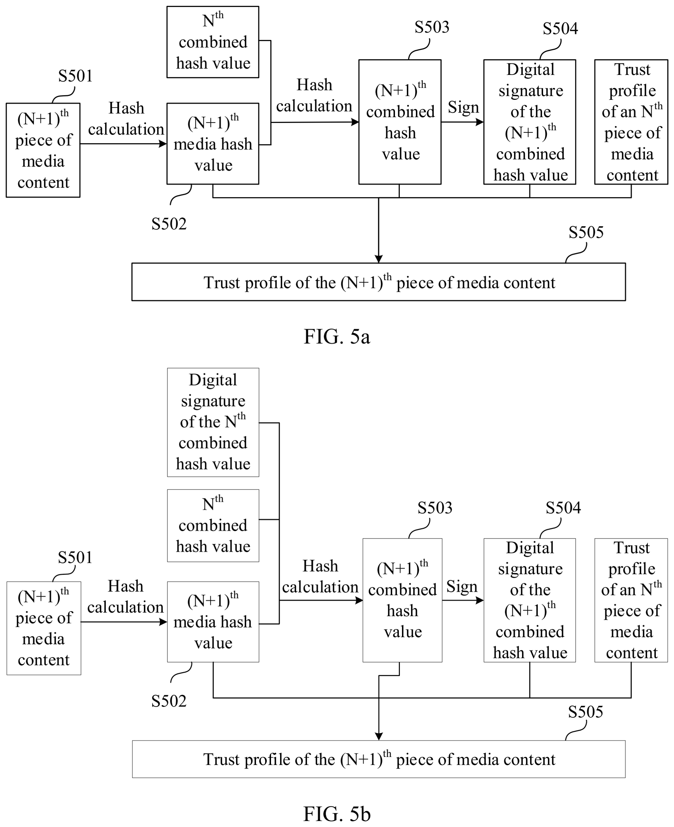

For example, in a process of generating the trust profile of the (N+1)^{th} piece of media content, an N^{th} combined hash value and the (N+1)^{th} media hash value may be associated and digitally signed, to prevent some information in the trust profile from being forged. For details, refer to descriptions in the embodiment in FIG. 5a.

FIG. 5a or 5b is a diagram of an example of a trust profile generation process.

S501: Obtain an (N+1)^{th} piece of media content, where the (N+1)^{th} piece of media content is obtained based on an N^{th} piece of media content.

S502: Perform hash calculation on the (N+1)^{th} piece of media content to obtain an (N+1)^{th} media hash value.

For example, hash calculation may be performed on the (N+1)^{th} piece of media content by using a hash algorithm, to obtain the (N+1)^{th} media hash value. It should be understood that the hash algorithm used in S502 is not limited in this application.

As shown in FIG. 5a, in S503, an (N+1)^{th} combined hash value is determined based on an N^{th} combined hash value and the (N+1)^{th} media hash value. For example, the N^{th} combined hash value and the (N+1)^{th} media hash value may be combined, and then hash calculation is performed by combining the N^{th} combined hash value and the (N+1)^{th} media hash value, to obtain the (N+1)^{th} combined hash value. In other words, in S503, the (N+1)^{th} combined hash value is a hash value obtained by combining the N^{th} combined hash value and the (N+1)^{th} media hash value.

As shown in FIG. 5b, in S503, the (N+1)^{th} combined hash value is determined based on the N^{th} combined hash value, a digital signature of the N^{th} combined hash value, and the (N+1)^{th} media hash value. For example, the N^{th} combined hash value, the digital signature of the N^{th} combined hash value, and the (N+1)^{th} media hash value may be combined, and then hash calculation is performed by combining the N^{th} combined hash value, the digital signature of the N^{th} combined hash value, and the (N+1)^{th} media hash value, to obtain the (N+1)^{th} combined hash value. In other words, in S503, the (N+1)^{th} combined hash value is a hash value obtained by combining the N^{th} combined hash value, the digital signature of the N^{th} combined hash value, and the (N+1)^{th} media hash value.

It should be understood that the hash algorithm used in S503 is not limited in this application.

S504: Digitally sign the (N+1)^{th} combined hash value by using an (N+1)^{th} private key, to obtain a digital signature of the (N+1)^{th} combined hash value.

In a possible manner, the (N+1)^{th} private key may be a private key of an (N+1)^{th} user, that is, the (N+1)^{th} private key corresponds to the (N+1)^{th} user.

In a possible manner, the (N+1)^{th} private key may be a private key of an (N+1)^{th} electronic device, that is, the (N+1)^{th} private key corresponds to the (N+1)^{th} electronic device.

It should be noted that any two of N+1 private keys may be the same or may be different, and may be specifically determined based on a user and an electronic device that generate a trust profile. This is not limited in this application.

For example, in this application, the (N+1)^{th} combined hash value may be digitally signed by using a digital signature algorithm and the (N+1)^{th} private key, to obtain the digital signature of the (N+1)^{th} combined hash value. It should be understood that the digital signature algorithm in S504 is not limited in this application.

S505: Add at least the (N+1)^{th} media hash value and the digital signature of the (N+1)^{th} combined hash value to a trust profile of the N^{th} piece of media content, to obtain the trust profile of the (N+1)^{th} piece of media content. For example, the (N+1)^{th} combined hash value may be further added to the trust profile of the N^{th} piece of media content, to obtain the trust profile of the (N+1)^{th} piece of media content.

It should be understood that, when N=1, it can be learned from descriptions of the embodiments in FIG. 2a and FIG. 3a that an obtained trust profile of first media content includes one media hash value (namely, a first media hash value), one combined hash value (namely, a first combined hash value), and a digital signature of the combined hash value (namely, a digital signature of the first combined hash value). A trust profile of second media content obtained by performing S502 to S505 may include two media hash values (including a first media hash value and a second media hash value), two combined hash values (including a first combined hash value and a second combined hash value), and digital signatures of the two combined hash values (namely, a digital signature of the first combined hash value and a digital signature of the second combined hash value).

A trust profile of the second media content obtained when N=2 includes two media hash values, two combined hash values, and digital signatures of the two combined hash values. A trust profile of third media content obtained by performing S502 to S505 may include three media hash values (including a first media hash value, a second media hash value, and a third media hash value), three combined hash values (including a first combined hash value, a second combined hash value, and a third combined hash value), and digital signatures of the three combined hash values (namely, a digital signature of the first combined hash value, a digital signature of the second combined hash value, and a digital signature of the third combined hash value).

In other words, the obtained trust profile of the N^{th} piece of media content may include N media hash values, N combined hash values, and digital signatures of the N combined hash values, and further the generated trust profile of the (N+1)^{th} piece of media content may include N+1 media hash values, N+1 combined hash values, and digital signatures of the N+1 combined hash values.

It should be noted that the (N+1)^{th} electronic device performs S502 to S505 regardless of whether an N^{th} user performs an information adding operation on a trust profile adding interface corresponding to the N^{th} piece of media content.

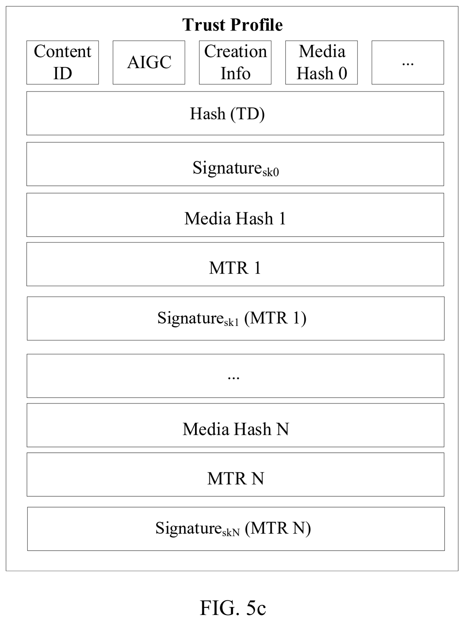

FIG. 5c is a diagram of an example of the trust profile.

In FIG. 5c, the trust profile of the (N+1)^{th} piece of media content may include: a content ID (namely, a digital content identifier of first media content), AIGC (namely, an AIGC identifier), creation info (namely, creation information that may include generation time of the first media content, an author name of the first media content, a generation location of the first media content, and the like), a media hash 0 (namely, a first media hash value), a hash (TD) (namely, a first combined hash value), Signatureₛₖ₀ (namely, a digital signature of the first combined hash value), a media hash 1 (namely, a second media hash value), an MTR 1 (namely, a second combined hash value), Signature (MTR 1) (namely, a digital signature of the second combined hash value), ..., a media hash N (namely, an (N+1)^{th} media hash value), MTR N (namely, an (N+1)^{th} combined hash value), and Signature_{skN} (MTR N) (namely, a digital signature of the (N+1)^{th} combined hash value).

It should be understood that FIG. 5c is merely an example of this application, and locations or an arrangement sequence of various information in the trust profile may be set as required. This is not limited in this application.

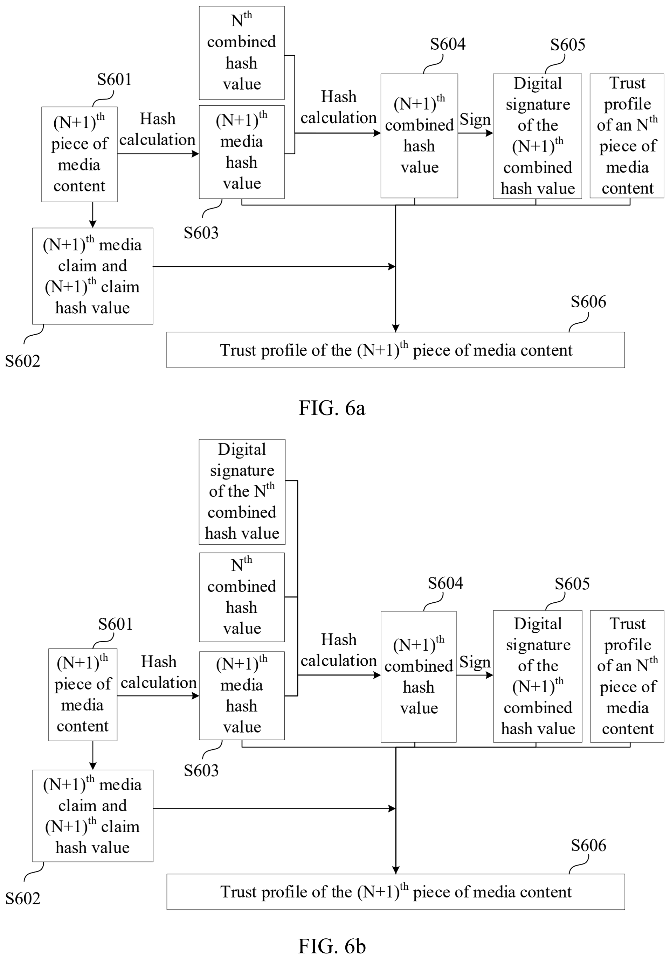

For example, a claim (Claim) of the (N+1)^{th} piece of media content and a hash value of a claim of second media content may be further generated, and the claim (Claim) of the (N+1)^{th} piece of media content and the hash value of the claim of the second media content are used as a part of the trust profile of the (N+1)^{th} piece of media content. Refer to descriptions of an embodiment in FIG. 6a.

FIG. 6a or FIG. 6b is a diagram of an example of a trust profile generation process.

S601: Obtain an (N+1)^{th} piece of media content, where the (N+1)^{th} piece of media content is obtained based on an N^{th} piece of media content.

S602: Obtain one or more (N+1)^{th} media claims and one or more (N+1)^{th} claim hash values.

In a possible manner, after an N^{th} user performs, on a trust profile adding interface corresponding to the N^{th} piece of media content, a claim adding operation on the (N+1)^{th} piece of media content, an N^{th} electronic device may obtain one or more claims of the (N+1)^{th} piece of media content (which may be referred to as an (N+1)^{th} media claim subsequently). The (N+1)^{th} media claim may include copyright information, a thumbnail, whether modification is possible, operation permission, use permission, a source of the (N+1)^{th} piece of media content, and the like. This is not limited in this application.

For example, it is assumed that the (N+1)^{th} piece of media content is an image. In this case, the one or more (N+1)^{th} media claims of the (N+1)^{th} piece of media content may be, for example, a claim of an unchangeable region in the (N+1)^{th} piece of media content, a claim of an unchangeable object in the (N+1)^{th} piece of media content, a claim of operation permission for the (N+1)^{th} piece of media content, and a claim of use permission for the (N+1)^{th} piece of media content.

In a possible manner, after an N^{th} user performs a forwarding operation on the N^{th} piece of media content, the N^{th} user may further enter a trust profile adding interface corresponding to the N^{th} piece of media content, and perform a claim adding operation on the (N+1)^{th} piece of media content. In this way, an (N+1)^{th} electronic device may obtain the one or more (N+1)^{th} media claims of the (N+1)^{th} piece of media content. The (N+1)^{th} media claim may include copyright information, a thumbnail, whether modification is possible, operation permission, use permission, a source of the (N+1)^{th} piece of media content, and the like. This is not limited in this application.

In a possible manner, when the (N+1)^{th} piece of media content is obtained by performing editing processing on the N^{th} piece of media content, in response to an editing operation performed by an (N+1)^{th} user on the N^{th} piece of media content, the (N+1)^{th} electronic device may record an editing processing parameter in a process of performing editing processing on the N^{th} piece of media content. After the (N+1)^{th} piece of media content is obtained, the one or more (N+1)^{th} media claims of the (N+1)^{th} piece of media content may be generated based on the recorded editing processing parameter.

The (N+1)^{th} media claim may include editing information. For example, it is assumed that the (N+1)^{th} piece of media content is an image. In this case, the one or more (N+1)^{th} media claims of the (N+1)^{th} piece of media content are, for example, a rotation parameter and a cropping parameter.

It should be understood that, when the (N+1)^{th} piece of media content is obtained by performing editing processing on the N^{th} piece of media content, after completing the editing operation on the N^{th} piece of media content, the (N+1)^{th} user may alternatively enter, in the (N+1)^{th} electronic device, a trust profile adding interface corresponding to the (N+1)^{th} piece of media content, to perform the claim adding operation on the (N+1)^{th} piece of media content. In this way, the (N+1)^{th} electronic device may obtain the one or more (N+1)^{th} media claims of the (N+1)^{th} piece of media content. In this case, the (N+1)^{th} media claim may include the copyright information, the thumbnail, whether modification is possible, the operation permission, the use permission, the source of the (N+1)^{th} piece of media content, and the like. This is not limited in this application.

For example, for each (N+1)^{th} media claim, hash calculation may be performed on the (N+1)^{th} media claim by using a hash algorithm, to obtain an (N+1)^{th} claim hash value of the (N+1)^{th} media claim. It should be understood that the hash algorithm used in S602 is not limited in this application.

It should be understood that S602 is an optional step. To be specific, in a trust profile generation process, the (N+1)^{th} piece of media content may be declared, or the (N+1)^{th} piece of media content may not be declared. This can improve flexibility and backward compatibility of the trust profile.

S603: Perform hash calculation on the (N+1)^{th} piece of media content to obtain an (N+1)^{th} media hash value.

As shown in FIG. 6a, in S604, an (N+1)^{th} combined hash value is determined based on the N^{th} combined hash value, the (N+1)^{th} media hash value, and the one or more (N+1)^{th} claim hash values.

For example, hash calculation may be performed by concatenating one or more hash values in the N^{th} combined hash value, the one or more (N+1)^{th} claim hash values, and the (N+1)^{th} media hash value, to obtain an intermediate hash value.

When the intermediate hash value is obtained by performing hash calculation by concatenating all hash values in the N^{th} combined hash value, the one or more (N+1)^{th} claim hash values, and the (N+1)^{th} media hash value, the intermediate hash value may be used as the (N+1)^{th} combined hash value.

As shown in FIG. 6b, in S604, the (N+1)^{th} combined hash value is determined based on the N^{th} combined hash value, a digital signature of the N^{th} combined hash value, the (N+1)^{th} media hash value, and the one or more (N+1)^{th} claim hash values.

For example, hash calculation may be performed by concatenating one or more hash values in the N^{th} combined hash value, the digital signature of the N^{th} combined hash value, the one or more (N+1)^{th} claim hash values, and the (N+1)^{th} media hash value, to obtain the intermediate hash value.

When the intermediate hash value is obtained by performing hash calculation by concatenating all hash values in the N^{th} combined hash value, the digital signature of the N^{th} combined hash value, the one or more (N+1)^{th} claim hash values, and the (N+1)^{th} media hash value, the intermediate hash value may be used as the (N+1)^{th} combined hash value.

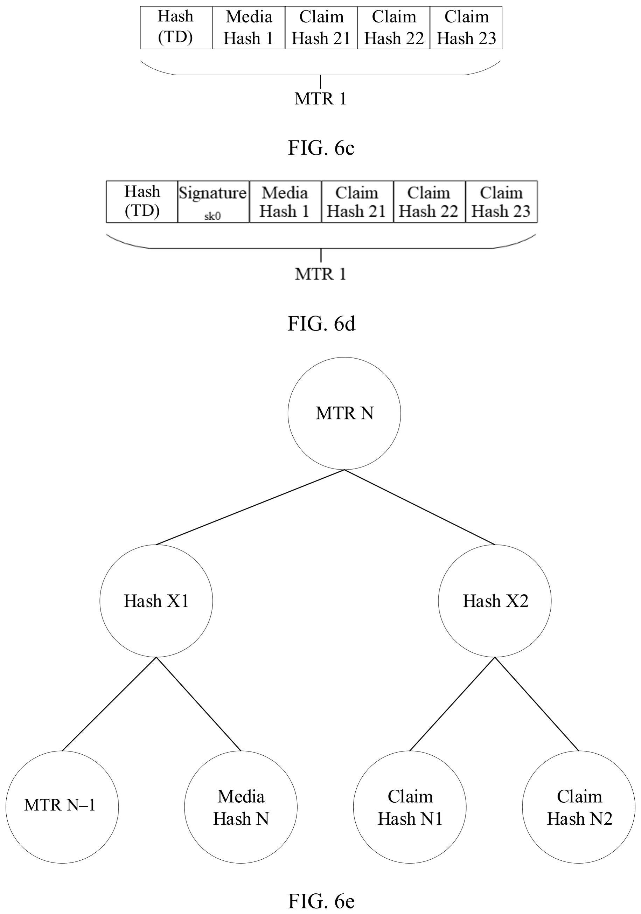

FIG. 6c or FIG. 6d is a diagram of an example of a process of generating the (N+1)^{th} combined hash value. In FIG. 6c or FIG. 6d, when N=1, a quantity of second claim hash values is 3. The three second claim hash values are a claim hash 21, a claim hash 22, and a claim hash 23.

It is assumed that a first combined hash value is a hash (TD), a digital signature of the first combined hash value is Signatureₛₖ₀, and a second media hash is a media hash 1. In FIG. 6c, hash calculation may be performed by concatenating the hash (TD), the media hash 1, the claim hash 21, the claim hash 22, and the claim hash 23, to obtain a second combined hash value MTR 1. In FIG. 6d, hash calculation may be performed by concatenating the hash (TD), Signatureₛₖ₀, the media hash 1, the claim hash 21, the claim hash 22, and the claim hash 23, to obtain a second combined hash value MTR 1. It should be understood that a sequence of concatenating the claim hash 21, the claim hash 22, the claim hash 23, Signatureₛₖ₀, the hash (TD), and the media hash 1 is not limited in this application.

As shown in FIG. 6c, when the intermediate hash value is obtained by performing hash calculation by concatenating some hash values in the N^{th} combined hash value, the one or more (N+1)^{th} claim hash values, and the (N+1)^{th} media hash value, hash calculation may be performed based on the intermediate hash value and other hash values in the N^{th} combined hash value, the one or more (N+1)^{th} claim hash values, and the (N+1)^{th} media hash value, to obtain the (N+1)^{th} combined hash value. For example, hash calculation may be performed on the N^{th} combined hash value, the (N+1)^{th} media hash value, and the one or more (N+1)^{th} claim hash values by using a hash tree, to obtain the (N+1)^{th} combined hash value.

As shown in FIG. 6d, when the intermediate hash value is obtained by performing hash calculation by concatenating some hash values in the N^{th} combined hash value, the digital signature of the N^{th} combined hash value, the one or more (N+1)^{th} claim hash values, and the (N+1)^{th} media hash value, hash calculation may be performed based on the intermediate hash value and other hash values in the N^{th} combined hash value, the digital signature of the N^{th} combined hash value, the one or more (N+1)^{th} claim hash values, and the (N+1)^{th} media hash value, to obtain the (N+1)^{th} combined hash value. For example, hash calculation may be performed on the N^{th} combined hash value, the digital signature of the N^{th} combined hash value, the (N+1)^{th} media hash value, and the one or more (N+1)^{th} claim hash values by using a hash tree, to obtain the (N+1)^{th} combined hash value.

The hash tree is a type of data structure. The hash tree may include but is not limited to a binary tree, a triple tree, a Merkle tree (Merkle Tree), and the like. This is not limited in this application.

In a possible manner, the (N+1)^{th} combined hash value is a value of a root node of the hash tree, and the N^{th} combined hash value, the (N+1)^{th} media hash value, and the one or more (N+1)^{th} claim hash values are values of leaf nodes of the hash tree respectively.

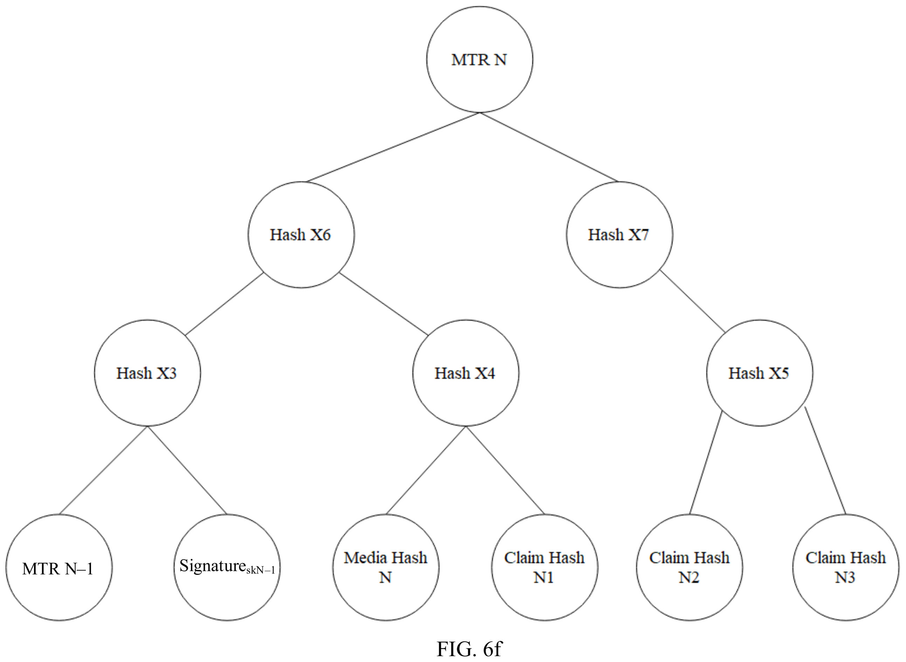

FIG. 6e and FIG. 6f are diagrams of an example of a process of generating the (N+1)^{th} combined hash value.

In FIG. 6e, the hash tree is a Merkle tree, the (N+1)^{th} combined hash value (MTR N) is a value of a root node of the Merkle tree (Merkle tree root, MTR), and the N^{th} combined hash value (MTR N-1), the (N+1)^{th} media hash value (a media hash N), and two (N+1)^{th} claim hash values (a claim hash N1 and a claim hash N2) are values of leaf nodes of the Merkle tree respectively.

With reference to FIG. 6e, for example, hash calculation may be performed by concatenating the MTR N-1 and the media hash N to obtain a hash X1 (namely, the intermediate hash value), and hash calculation may be performed by concatenating the claim hash N1 and the claim hash N2 to obtain a hash X2 (namely, the intermediate hash value). Then, hash calculation is performed by concatenating the hash X1 and the hash X2 to obtain the MTR N.

In FIG. 6f, the (N+1)^{th} combined hash value (MTR N) is a value of a root node of the Merkle tree (Merkle tree root, MTR), and the N^{th} combined hash value (MTR N-1), the digital signature (Signature_{skN-1}) of the N^{th} combined hash value, the (N+1)^{th} media hash value (a media hash N), and two (N+1)^{th} claim hash values (a claim hash N1 and a claim hash N2) are values of leaf nodes of the Merkle tree respectively.

With reference to FIG. 6f, for example, hash calculation may be performed by concatenating the MTR N-1 and Signature_{skN-1} to obtain a hash X3 (namely, the intermediate hash value), hash calculation may be performed by concatenating the claim hash N1 and the media hash N to obtain a hash X4 (namely, the intermediate hash value), and hash calculation may be performed by concatenating the claim hash N2 and the claim hash N3 to obtain a hash X5 (namely, the intermediate hash value). Then, hash calculation is performed by concatenating the hash X3 and the hash X4 to obtain a hash X6, and hash calculation is performed on the post-concatenation hash X5 to obtain a hash X7. Then, hash calculation is performed by concatenating the hash X6 and the hash X7 to obtain the MTR N.

When N is equal to 1, an MTR 0 refers to a first combined hash value, namely, the hash (TD).

It should be understood that FIG. 6e or FIG. 6f is merely an example of the Merkle tree. The Merkle tree in this application may be another data structure. This is not limited in this application.

It should be understood that specific leaf nodes, corresponding to the N^{th} combined hash value, the (N+1)^{th} media hash value, and one or more (N+1)^{th} claim hash values, of the Merkle tree, is not limited in this application.

In a possible manner, the (N+1)^{th} combined hash value is a value of a root node of the hash tree, the N^{th} combined hash value is a value of a root node of a left subtree of the hash tree, and the (N+1)^{th} media hash value and the one or more (N+1)^{th} claim hash values are values of leaf nodes of a right subtree of the hash tree respectively.

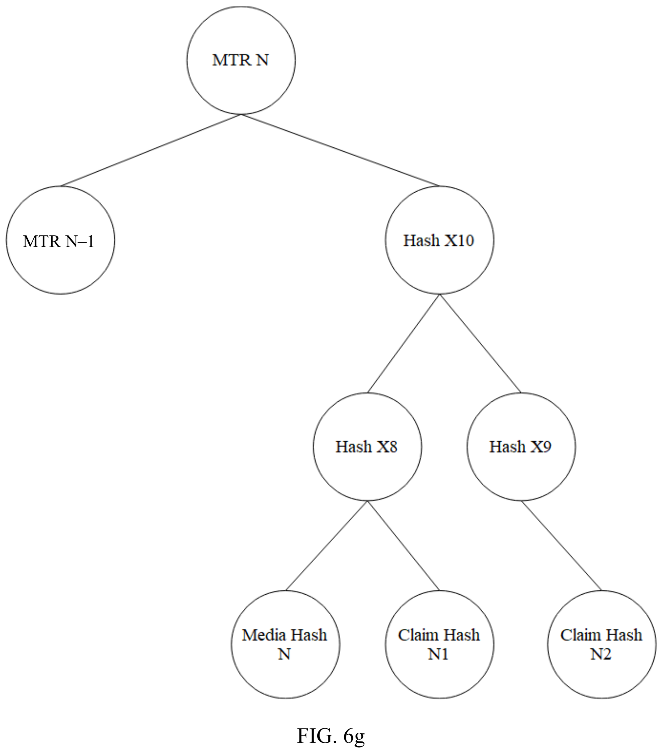

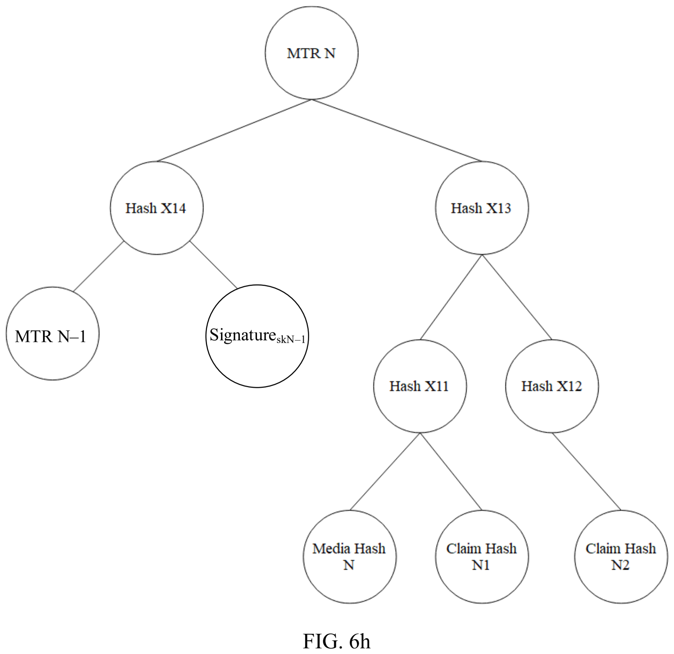

FIG. 6g or FIG. 6h is a diagram of an example of a process of generating the (N+1)^{th} combined hash value.

In FIG. 6g, the hash tree is a Merkle tree, the (N+1)^{th} combined hash value (MTR N) is a value of a root node of the Merkle tree, the N^{th} combined hash value (MTR N-1) is a value of a root node of a left subtree of the Merkle tree, and the (N+1)^{th} media hash value (a media hash N) and two (N+1)^{th} claim hash values (a claim hash N1 and a claim hash N2) are values of leaf nodes of a right subtree of the Merkle tree respectively. With reference to FIG. 6g, for example, hash calculation may be performed by concatenating the claim hash N1 and the media hash N to obtain a hash X8 (namely, the intermediate hash value), and hash calculation may be performed on the claim hash N2 to obtain a hash X9 (namely, the intermediate hash value). Then, hash calculation is performed by concatenating the hash X8 and the hash X9 to obtain a hash X10. Then, hash calculation is performed by concatenating the hash X10 and the MTR N-1 to obtain the MTR N.

In FIG. 6h, the hash tree is a Merkle tree, the (N+1)^{th} combined hash value (MTR N) is a value of a root node of the Merkle tree, a hash X14 is a value of a root node of a left subtree of the Merkle tree, the N^{th} combined hash value (MTR N-1) and the digital signature (Signature_{skN-1}) of the N^{th} combined hash value are values of child nodes of the root node of the left subtree, and the (N+1)^{th} media hash value (a media hash N) and the two (N+1)^{th} claim hash values (a claim hash N1 and a claim hash N2) are values of leaf nodes of a right subtree of the Merkle tree respectively. With reference to FIG. 6h, for example, hash calculation may be performed by concatenating the claim hash N1 and the media hash N to obtain a hash X11 (namely, the intermediate hash value), hash calculation may be performed on the claim hash N2 to obtain a hash X12 (namely, the intermediate hash value), and hash calculation may be performed by concatenating the MTR N-1 and Signature_{skN-1} to obtain a hash X14 (namely, the intermediate hash value). Then, hash calculation is performed by concatenating the hash X11 and the hash X12 to obtain a hash X13. Then, hash calculation is performed by concatenating the hash X3 and the hash X14 to obtain the MTR N.

When N is equal to 1, an MTR 0 refers to a first combined hash value, namely, the hash (TD).

It should be understood that specific leaf nodes, corresponding to the (N+1)^{th} media hash value and the one or more (N+1)^{th} claim hash values, of the Merkle tree, is not limited in this application.

For example, when the hash tree is a Merkle tree, the Merkle tree may be further pruned, to reduce a memory occupied by the trust profile. Specifically, a part or all of the one or more (N+1)^{th} media claims and a corresponding (N+1)^{th} claim hash value may be deleted, and only a hash value of a parent node of the deleted (N+1)^{th} claim hash value is reserved. In addition, the deleted (N+1)^{th} media claim may alternatively be claimed (which may be referred to as an (N+1)^{th} media deletion claim), and the hash value of the parent node of the deleted (N+1)^{th} claim hash value is used as a hash value of the (N+1)^{th} media deletion claim (which may be referred to as an (N+1)^{th} claim deletion hash value).

For example, with reference to FIG. 6e, the claim hash N1 and the claim hash N2 in FIG. 6e may be deleted, and the hash X2 is reserved.

S605: Digitally sign the (N+1)^{th} combined hash value by using an (N+1)^{th} private key, to obtain a digital signature of the (N+1)^{th} combined hash value.

For example, it should be understood that a digital signature algorithm used in S605 is not limited in this application.

S606: Add the one or more (N+1)^{th} media claims, the one or more (N+1)^{th} claim hash values, the (N+1)^{th} media hash value, the (N+1)^{th} combined hash value, and the digital signature of the (N+1)^{th} combined hash value to a trust profile of the N^{th} piece of media content, to obtain a trust profile of the (N+1)^{th} piece of media content.

It should be understood that a trust profile of first media content does not include a media claim and a claim hash value.

In the embodiment of FIG. 6a or 6b, the trust profile of the (N+1)^{th} piece of media content may include initial information of the first media content, N+1 media hash values, N+1 combined hash values, digital signatures of the N+1 combined hash values, the one or more (N+1)^{th} media claims, and the one or more (N+1)^{th} claim hash values.

It should be understood that, when the trust profile of the N^{th} piece of media content includes one or more N^{th} media claims and one or more N^{th} claim hash values, the trust profile of the (N+1)^{th} piece of media content may further include the one or more N^{th} media claims and the one or more N^{th} claim hash values. When a trust profile of the (N-1)^{th} piece of media content includes one or more (N-1)^{th} media claims and one or more (N-1)^{th} claim hash values, the trust profile of the (N+1)^{th} piece of media content may further include the one or more (N-1)^{th} media claims and the one or more (N-1)^{th} claim hash values, and so on. This is not limited in this application.

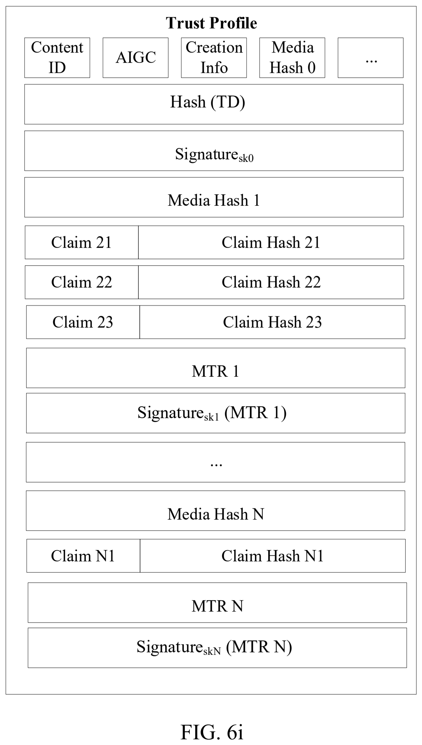

FIG. 6i is a diagram of an example of a trust profile.

In FIG. 6i, the trust profile of the (N+1)^{th} piece of media content may include: a content ID (namely, a digital content identifier of the first media content), AIGC (namely, an AIGC identifier), creation info (namely, creation information that may include generation time of the first media content, an author name of the first media content, a generation location of the first media content, and the like), a media hash 0 (namely, a first media hash value), a hash (TD) (namely, the first combined hash value), Signatureₛₖ₀ (namely, the digital signature of the first combined hash value), a media hash 1 (namely, a second media hash value), an MTR 1 (namely, the second combined hash value), Signatureₛₖ₁ (MTR 1) (namely, a digital signature of the second combined hash value), a claim 21 (namely, a second media claim), a claim hash 21 (namely, the second claim hash value), a claim 22 (namely, the second media claim), a claim hash 22 (the second claim hash value), a claim 23 (namely, the second media claim), a claim hash 23 (namely, the second claim hash value), ..., a media hash N (namely, the (N+1)^{th} media hash value), an MTR N (namely, the (N+1)^{th} combined hash value), Signature_{skN} (MTR N) (namely, the digital signature of the (N+1)^{th} combined hash value), a claim N1 (namely, the (N+1)^{th} media claim), and a claim hash N1 (namely, the (N+1)^{th} claim hash value).

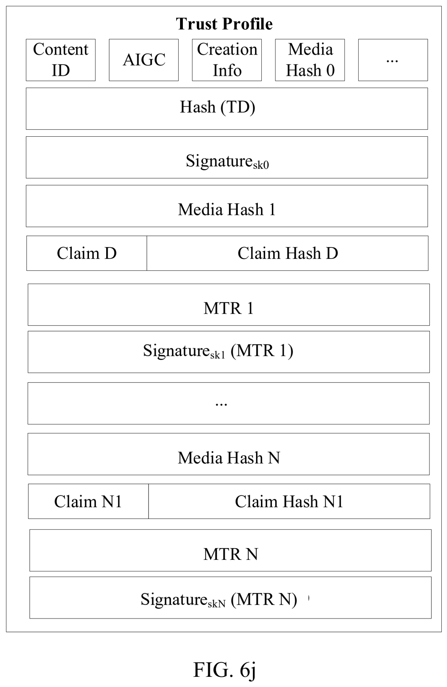

FIG. 6j is a diagram of an example of a trust profile.

For example, FIG. 6j is a diagram of a trust profile in which all second media claims and second claim hash values of all second media claims in FIG. 6i are deleted, and a second media deletion claim (Claim D) and a second claim deletion hash value (Claim Hash D) are added. For other information in FIG. 6j, refer to descriptions in FIG. 6i. Details are not described herein again.

It should be understood that FIG. 6i and FIG. 6j are merely an example of this application, and locations or an arrangement sequence of various information in the trust profile may be set as required. This is not limited in this application.

For example, the (N+1)^{th} media hash value, the (N+1)^{th} combined hash value, and the digital signature of the (N+1)^{th} combined hash value may be encapsulated to obtain the trust profile of the (N+1)^{th} piece of media content.

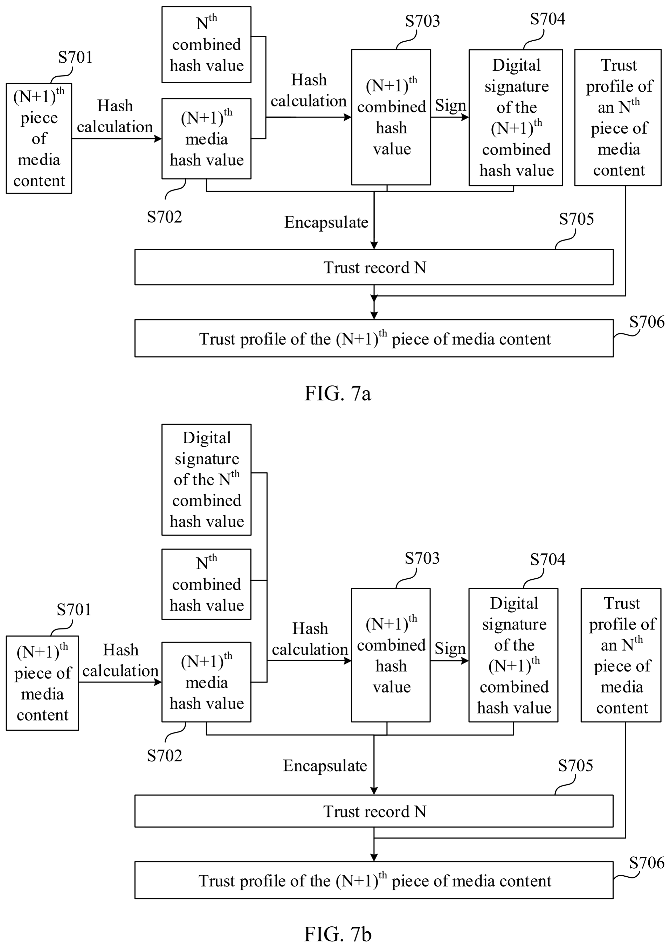

FIG. 7a or FIG. 7b is a diagram of an example of a trust profile generation process. FIG. 7a is described based on FIG. 5a, and FIG. 7b is described based on FIG. 5b.

S701: Obtain an (N+1)^{th} piece of media content, where the (N+1)^{th} piece of media content is obtained based on an N^{th} piece of media content.

S702: Perform hash calculation on the (N+1)^{th} piece of media content to obtain an (N+1)^{th} media hash value.

S703: Determine an (N+1)^{th} combined hash value based on an N^{th} combined hash value and the (N+1)^{th} media hash value.

S704: Digitally sign the (N+1)^{th} combined hash value by using an (N+1)^{th} private key, to obtain a digital signature of the (N+1)^{th} combined hash value.

S705: Encapsulate the (N+1)^{th} media hash value, the (N+1)^{th} combined hash value, and the digital signature of the (N+1)^{th} combined hash value to obtain a trust record (Trust Record or Trust Manifest) of the (N+1)^{th} piece of media content.

The trust record of the (N+1)^{th} piece of media content may be represented by a trust record N. For example, when N is equal to 1, a trust record of the second media content may be represented by a trust record 1.

For example, the (N+1)^{th} media hash value, the (N+1)^{th} combined hash value, and the digital signature of the (N+1)^{th} combined hash value may be encapsulated together to obtain the trust record N.

S706: Add the trust record N to a trust profile of the N^{th} piece of media content to obtain a trust profile of the (N+1)^{th} piece of media content.

It should be understood that, when information in the trust profile of the N^{th} piece of media content is not encapsulated into a trust declaration, a trust record 1, ..., and a trust record N-1, before S706, the information in the trust profile of the N^{th} piece of media content may be further encapsulated into the trust declaration, the trust record 1, ..., and the trust record N-1; and then the trust declaration, the trust record 1, ..., and the trust record N-1 may be encapsulated into the trust profile of the N^{th} piece of media content. Then, the trust record N may be added to the trust profile of the N^{th} piece of media content, to obtain the trust profile of the (N+1)^{th} piece of media content. It should be noted that adding the trust record N to the trust profile of the N^{th} piece of media content may be understood as encapsulating the trust record N, the trust declaration, the trust record 1, ..., and the trust record N-1 together to obtain the trust profile of the (N+1)^{th} piece of media content.

For a process of encapsulating the information in the trust profile of the N^{th} piece of media content into the trust declaration, refer to descriptions in the foregoing embodiment. For a process of encapsulating the information in the trust profile of the N^{th} piece of media content into the trust record 1, ..., and the trust record N-1, refer to description in S705. Details are not described herein again.

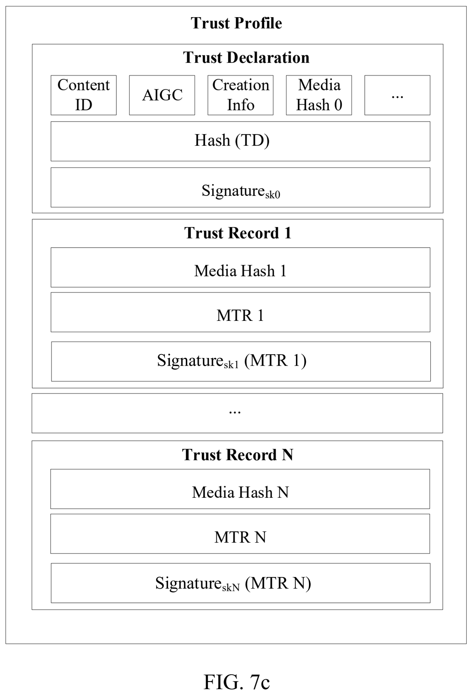

FIG. 7c is a diagram of an example of the trust profile.

In FIG. 7c, the trust profile of the (N+1)^{th} piece of media content may include a trust declaration, a trust record 1, ..., and a trust record N. The trust record 1 may include a second media hash value (media hash 1), a second combined hash value (an MTR 1), and a digital signature (Signatureₛₖ₁ (MTR 1)) of the second combined hash value. The trust record N may include a media hash N (namely, the (N+1)^{th} media hash value), an MTR N (namely, the (N+1)^{th} combined hash value), and Signature_{skN} (MTR N) (namely, the digital signature of the (N+1)^{th} combined hash value).

It should be understood that FIG. 7c is merely an example of this application, and locations or an arrangement sequence of various information in the trust profile may be set as required. This is not limited in this application.

For example, the (N+1)^{th} media hash value, the (N+1)^{th} combined hash value, the digital signature of the (N+1)^{th} combined hash value, one or more (N+1)^{th} media claims, and one or more (N+1)^{th} claim hash values may be encapsulated to obtain the trust profile of the (N+1)^{th} piece of media content.

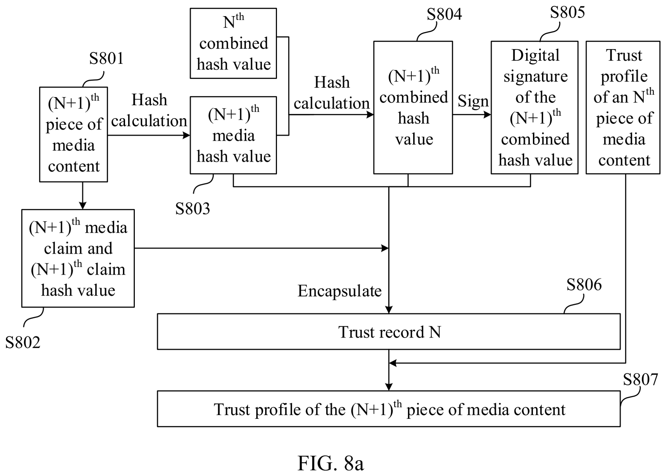

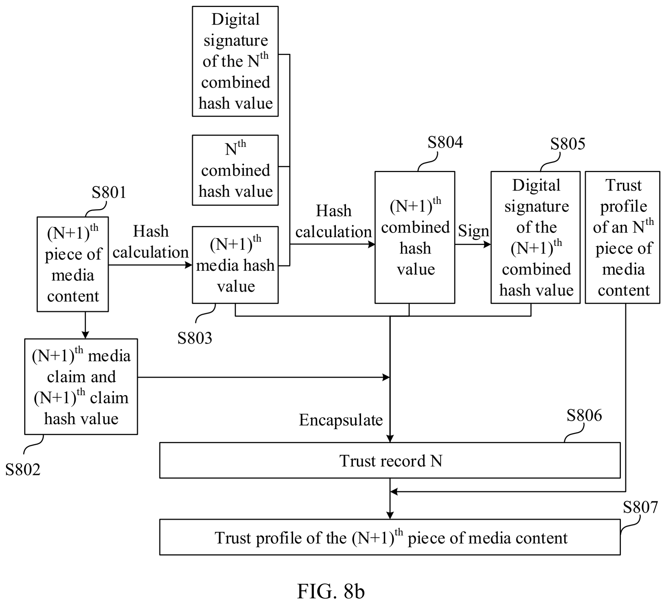

FIG. 8a or FIG. 8b is a diagram of an example of a trust profile generation process. FIG. 8a is described based on FIG. 6a, and FIG. 8b is described based on FIG. 6b.

S801: Obtain an (N+1)^{th} piece of media content, where the (N+1)^{th} piece of media content is obtained based on an N^{th} piece of media content.

S802: Obtain one or more (N+1)^{th} media claims and one or more (N+1)^{th} claim hash values.

S803: Perform hash calculation on the (N+1)^{th} piece of media content to obtain an (N+1)^{th} media hash value.

S804: Determine an (N+1)^{th} combined hash value based on an N^{th} combined hash value, the (N+1)^{th} media hash value, and the one or more (N+1)^{th} claim hash values.

S805: Digitally sign the (N+1)^{th} combined hash value by using an (N+1)^{th} private key, to obtain a digital signature of the (N+1)^{th} combined hash value.

S806: Encapsulate the (N+1)^{th} media hash value, the (N+1)^{th} combined hash value, the digital signature of the (N+1)^{th} combined hash value, the one or more (N+1)^{th} media claims, and the one or more (N+1)^{th} claim hash values to obtain a trust record N.

S807: Add the trust record N to a trust profile of the N^{th} piece of media content to obtain a trust profile of the (N+1)^{th} piece of media content.

It should be understood that, when information in the trust profile of the N^{th} piece of media content is not encapsulated into a trust declaration, a trust record 1, ..., and a trust record N-1, before S807, the information in the trust profile of the N^{th} piece of media content may be further encapsulated into the trust declaration, the trust record 1, ..., and the trust record N-1; and then the trust record N is added to the trust profile of the N^{th} piece of media content, to obtain the trust profile of the (N+1)^{th} piece of media content.

For a process of encapsulating the information in the trust profile of the N^{th} piece of media content into the trust declaration, refer to descriptions in the foregoing embodiment. For a process of encapsulating the information in the trust profile of the N^{th} piece of media content into the trust record 1, ..., and the trust record N-1, refer to description in S806. Details are not described herein again.

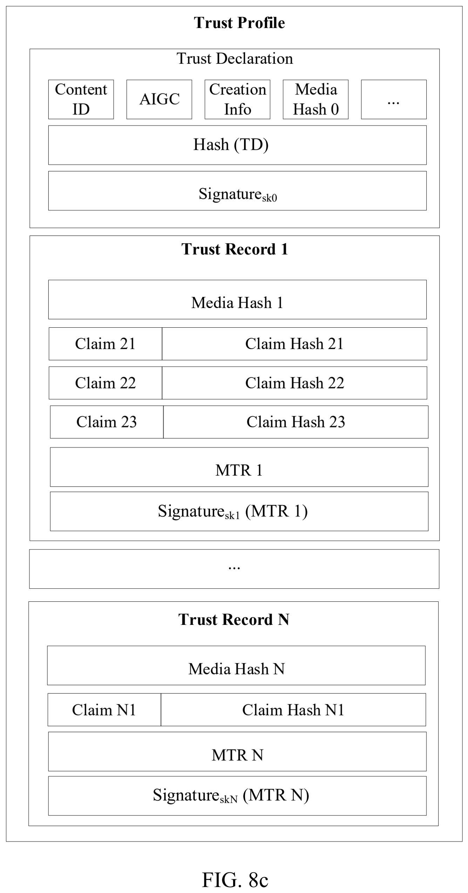

FIG. 8c is a diagram of an example of the trust profile.

In FIG. 8c, the trust profile of the (N+1)^{th} piece of media content may include a trust declaration, a trust record 1, ..., and a trust record N. The trust record 1 may include a media hash 1 (namely, a second media hash value), an MTR 1 (namely, a second combined hash value), Signatureₛₖ₁ (MTR 1) (namely, a digital signature of the second combined hash value), a claim 21 (namely, a second media claim), a claim hash 21 (namely, a second claim hash value), a claim 22 (namely, the second media claim), a claim hash 22 (namely, the second claim hash value), a claim 23 (namely, the second media claim), and a claim hash 23 (namely, the second claim hash value). The trust record N may include a media hash N (namely, the (N+1)^{th} media hash value), an MTR N (namely, the (N+1)^{th} combined hash value), Signature_{skN} (MTR N) (namely, a digital signature of the (N+1)^{th} combined hash value), a claim N1 (namely, the (N+1)^{th} media claim), and a claim hash N1 (namely, the (N+1)^{th} claim hash value).

It should be understood that FIG. 8c is merely an example of this application, and locations or an arrangement sequence of various information in the trust profile may be set as required. This is not limited in this application.

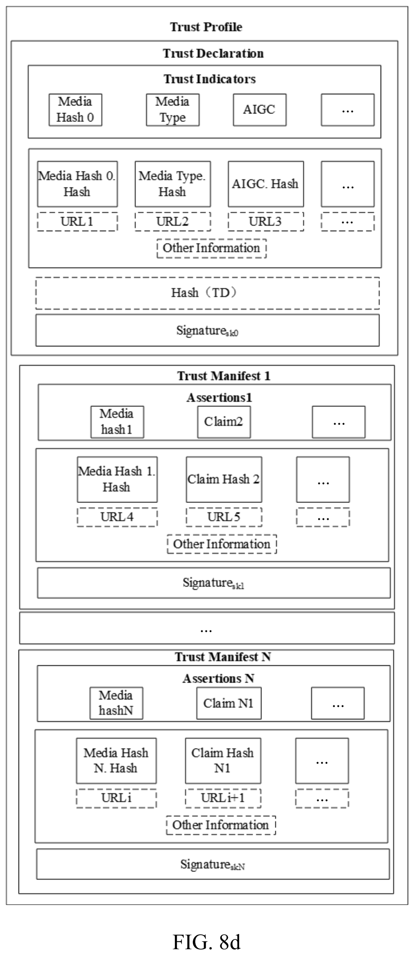

FIG. 8d is a diagram of an example of the trust profile.

In FIG. 8d, the trust profile may include a trust manifest and a second digital signature. The second digital signature is a digital signature of second data. The trust manifest may include a modification assertion. The assertion may include the (N+1)^{th} media hash value and an (N+1)^{th} claim. The second data may be data determined based on at least the (N+1)^{th} media hash value and the (N+1)^{th} claim. For example, at least the (N+1)^{th} media hash value and the (N+1)^{th} claim may be encapsulated to form the assertion.

For example, the second data is data obtained by combining at least the (N+1)^{th} media hash value and the (N+1)^{th} claim, or the first data is data obtained by combining at least a hash value of the (N+1)^{th} claim and a hash value of the (N+1)^{th} media hash value.

For example, the second data may alternatively be an (N+1)^{th} combined hash value, and the (N+1)^{th} combined hash value includes a hash value obtained by combining the (N+1)^{th} claim and a hash value of the (N+1)^{th} media hash value. For example, the (N+1)^{th} combined hash value includes a hash value obtained by combining the (N+1)^{th} claim and a hash value of the (N+1)^{th} media hash value, and a hash value obtained by combining other descriptive information. The other descriptive information may not be other descriptive information in the (N+1)^{th} claim, for example, information about a tool for generating a trust manifest or other information describing the (N+1)^{th} claim. This is not limited in this application.

For example, the second data may alternatively be an (N+1)^{th} combined hash value. The (N+1)^{th} combined hash value may include a hash value obtained by combining a hash value of the (N+1)^{th} claim and a hash value (for example, the second media hash value Media Hash 1. Hash) of the (N+1)^{th} media hash value. For example, the second combined hash value is a hash value obtained by combining the hash value of the (N+1)^{th} claim, the hash value of the (N+1)^{th} media hash value, and a hash value of other metadata information.

For example, in FIG. 8d, metadata of the (N+1)^{th} piece of media content may further include the hash value of the (N+1)^{th} media hash value and the hash value of the (N+1)^{th} claim. For example, the hash value (Media Hash N. Hash) of the (N+1)^{th} media hash value and the hash value (Claim Hash N1) of the (N+1)^{th} claim may be encapsulated together. For example, a hash value of the second media hash value and the second claim hash value may be encapsulated together. This is not enumerated herein. For example, there may be a plurality of trust manifests, and there may be one or more second claims. For example, a quantity of trust manifests is similar to a quantity of trust records. Details are not described herein again.

For example, in FIG. 8d, metadata of second media content may further include an (N+1)^{th} uniform resource locator (URL, Uniform Resource Locator), and the (N+1)^{th} URL indicates a location of the (N+1)^{th} claim or the (N+1)^{th} media hash value in an (N+1)^{th} piece of metadata. For example, a URL 4 is a location of the second media hash value in the metadata of the second media content, a URL 5 is a location of the (N+1)^{th} claim in the metadata of the second media content, a URL i is a location of the (N+1)^{th} media hash value in the metadata of the (N+1)^{th} piece of media content, a URL i+1 is a location of the (N+1)^{th} claim in the metadata of the (N+1)^{th} piece of media content, where i depends on a specific environment, and i is a positive integer.

For example, the hash value of the (N+1)^{th} media hash value, the hash value of the (N+1)^{th} claim, and corresponding URLs may be encapsulated together.

For example, the metadata of the (N+1)^{th} piece of media content may further include other information, and the other information may be information that is not used to confirm authenticity of the (N+1)^{th} piece of media content, for example, a file name and a name of the hash algorithm. The hash algorithm is used to calculate the hash value mentioned in the foregoing embodiment.

For example, the (N+1)^{th} combined hash value may be a hash value of data obtained by combining the hash value of the (N+1)^{th} claim, the hash value of the (N+1)^{th} media hash value, and the (N+1)^{th} URL. For example, the (N+1)^{th} combined hash value may be a hash value obtained by combining the hash value of the (N+1)^{th} claim, the hash value of the (N+1)^{th} media hash value, the (N+1)^{th} URL, and the other information. The following describes a process of verifying the trust profile.

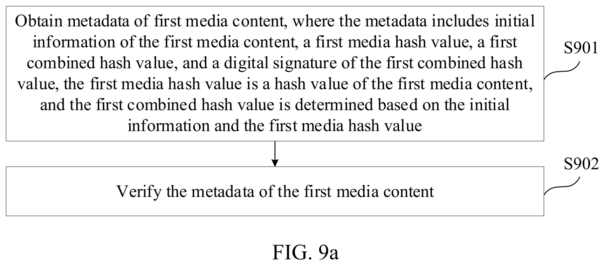

FIG. 9a is a diagram of an example of a verification process. In an embodiment in FIG. 9a, the trust profile of the first media content in the embodiment in FIG. 2a or FIG. 3a is verified. It should be understood that an electronic device that verifies the trust profile of the first media content may be a first electronic device, or may be another electronic device. This is not limited in this application.

S901: Obtain metadata of the first media content, where the metadata includes initial information of the first media content, a first media hash value, a first combined hash value, and a digital signature of the first combined hash value, the first media hash value is a hash value of the first media content, and the first combined hash value is determined based on the initial information and the first media hash value.

For example, when source tracing needs to be performed on the first media content or authenticity of the first media content needs to be determined, the trust profile of the first media content may be obtained from the metadata of the first media content; and then S902 is performed.

For example, when the trust profile of the first media content is shown in the embodiment in FIG. 3a, the trust profile of the first media content may be decapsulated to obtain a trust declaration; and then the trust declaration is decapsulated to obtain the initial information of the first media content, the first media hash value, the first combined hash value, and the digital signature of the first combined hash value.

S902: Verify the metadata of the first media content.

For example, in S902, the trust profile of the first media content may be verified.

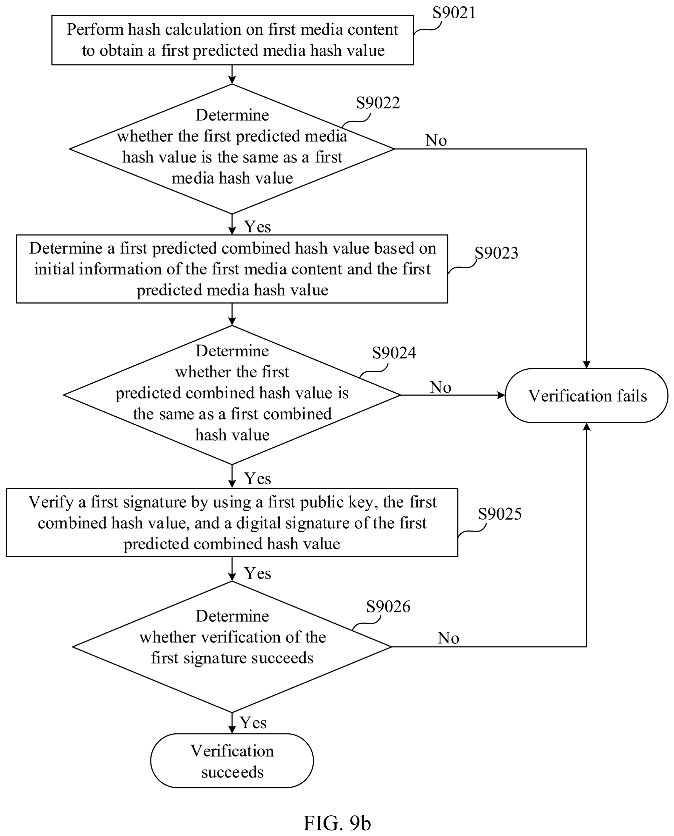

FIG. 9b is a diagram of an example of a verification process. With reference to FIG. 9b, for example, S902 may include the following steps S9021 to S9026.

S9021: Perform hash calculation on the first media content to obtain a first predicted media hash value.

For example, hash calculation may be performed on the first media content by using a hash algorithm, to obtain the first predicted media hash value. It should be understood that the hash algorithm used in S9021 is the same as the hash algorithm used in S302 in the embodiment in FIG. 3a.

S9022: Determine whether the first predicted media hash value is the same as the first media hash value in the trust profile of the first media content.

For example, when the first predicted media hash value is the same as the first media hash value in the trust profile of the first media content, it indicates that a trust profile is the trust profile of the first media content, or it indicates that the first media hash value is not tampered with. In this case, S9023 may be performed to continue to verify other information in the trust profile of the first media content. When the first predicted media hash value is different from the first media hash value in the trust profile of the first media content, it indicates that a trust profile is not the trust profile of the first media content, or it indicates that the first media hash value is tampered with. In this case, it may be determined that verification of the trust profile of the first media content fails.

S9023: Determine a first predicted combined hash value based on the initial information of the first media content and the first predicted media hash value when the first media predicted hash value is the same as the first media hash value in the first trust profile.

For example, when the first media predicted hash value is the same as the first media hash value in the trust profile of the first media content, the initial information of the first media content and the first predicted media hash value may be combined (which may also be referred to as concatenation or cascading); and the hash algorithm is used to perform hash calculation on the initial information of the first media content and the first predicted media hash value that are combined, to obtain the first predicted combined hash value.

It should be understood that the hash algorithm used in S9023 is the same as the hash algorithm used in S303 in the embodiment in FIG. 3a.

S9024: Determine whether the first predicted combined hash value is the same as the first combined hash value in the trust profile of the first media content.

For example, when the first predicted combined hash value is the same as the first combined hash value in the trust profile of the first media content, it indicates that the first combined hash value in the trust profile of the first media content is not tampered with, and the initial information of the first media content is not tampered with. In this case, S9025 may be performed to continue to verify the other information in the trust profile of the first media content. When the first predicted combined hash value is different from the first combined hash value in the trust profile of the first media content, it indicates that the first combined hash value in the trust profile of the first media content is tampered with or the initial information of the first media content is tampered with. In this case, it may be determined that the verification of the trust profile of the first media content fails.

S9025: Verify a first signature by using a first public key, the first combined hash value, and a digital signature of the first predicted combined hash value, when the first predicted combined hash value is the same as the first combined hash value in the trust profile of the first media content.

For example, the first public key and a first private key are a key pair. It should be understood that a digital signature algorithm used in a first signature verification process in S9025 is the same as the digital signature algorithm used in S304.

S9026: Determine whether verification of the first signature succeeds.

For example, when the first predicted combined hash value is the same as the first combined hash value in the trust profile of the first media content, the digital signature of the first combined hash value may be decrypted by using the first public key, to obtain a decrypted hash value; and it is determined whether the decrypted hash value is the same as the first predicted combined hash value.

When the decrypted hash value is different from the first predicted combined hash value, it indicates that the verification of the first signature fails. In this case, it may be determined that the verification of the trust profile of the first media content fails, that is, the trust profile of the first media content is false.

When the decrypted hash value is the same as the first predicted combined hash value, it indicates that the verification of the first signature succeeds. In this case, the verification of the trust profile of the first media content succeeds, that is, the trust profile of the first media content is true. For example, when the trust profile of the first media content is true, a user may further determine authenticity of the first media content, or determine that content in the first media content is true. This is not limited in this application.

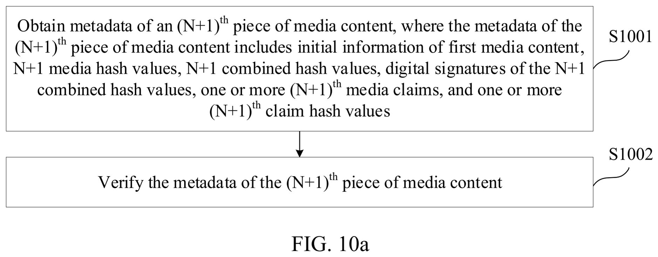

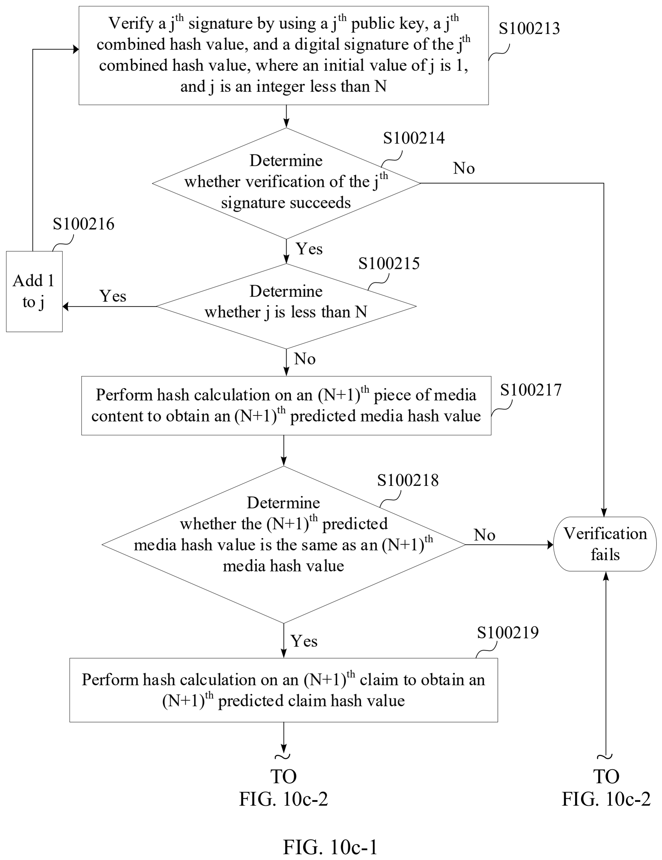

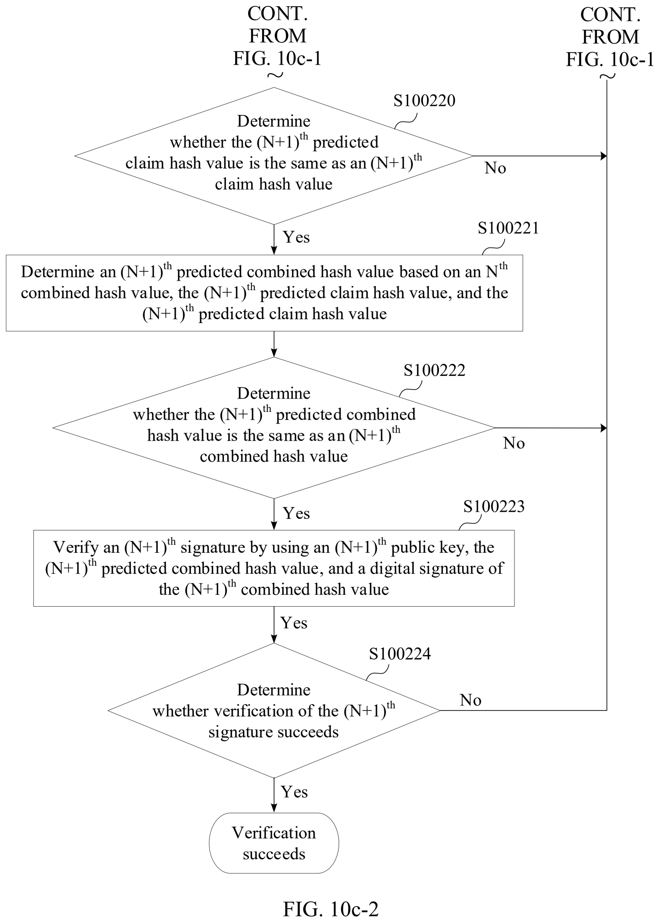

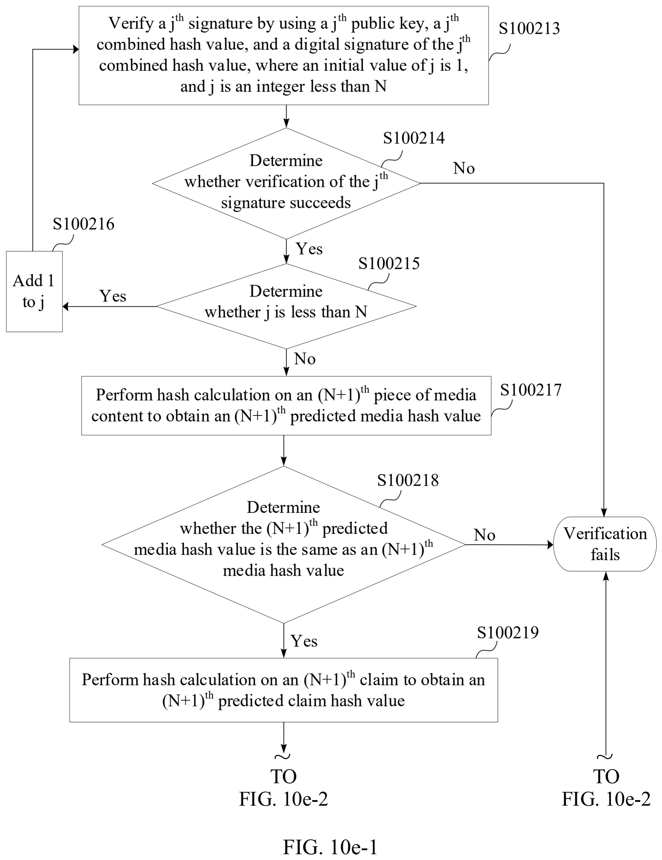

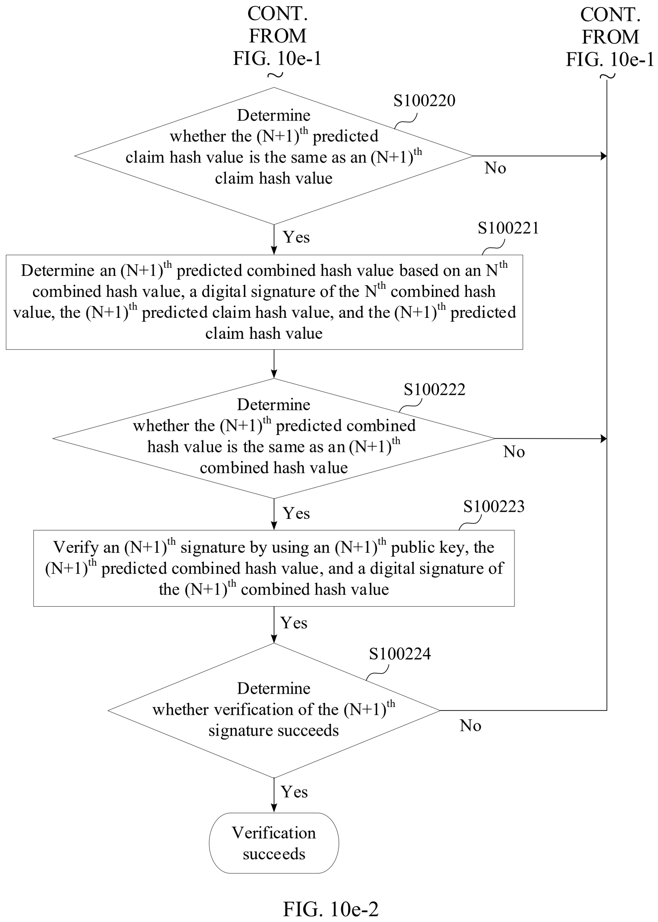

FIG. 10a is a diagram of an example of a verification process. In an embodiment of FIG. 10a, the trust profile of the (N+1)^{th} piece of media content in the embodiment of FIG. 6a or FIG. 8a is verified. It should be understood that an electronic device that verifies the trust profile of the (N+1)^{th} piece of media content may be an (N+1)^{th} electronic device, or may be another electronic device. This is not limited in this application.

S1001: Obtain metadata of the (N+1)^{th} piece of media content, where the metadata of the (N+1)^{th} piece of media content includes initial information of first media content, N+1 media hash values, N+1 combined hash values, digital signatures of the N+1 combined hash values, one or more (N+1)^{th} media claims, and one or more (N+1)^{th} claim hash values.

For example, when source tracing needs to be performed on the (N+1)^{th} piece of media content or authenticity of the (N+1)^{th} piece of media content needs to be determined, the trust profile of the (N+1)^{th} piece of media content may be obtained from the metadata of the (N+1)^{th} piece of media content; and then S1002 is performed.

For example, when the obtained trust profile of the (N+1)^{th} piece of media content is the trust profile that is of the (N+1)^{th} piece of media content and that is generated in FIG. 8a, the trust profile of the (N+1)^{th} piece of media content may be decapsulated to obtain a trust declaration, a trust record 1, ..., and a trust record N, and then, the trust declaration, the trust record 1, ..., and the trust record N may be separately decapsulated to obtain the initial information of the first media content, the N+1 media hash values, the N+1 combined hash values, the digital signatures of the N+1 combined hash values, the one or more (N+1)^{th} media claims, and the one or more (N+1)^{th} claim hash values.

S1002: Verify the metadata of the (N+1)^{th} piece of media content.

For example, in S1002, the trust profile of the (N+1)^{th} piece of media content may be verified.

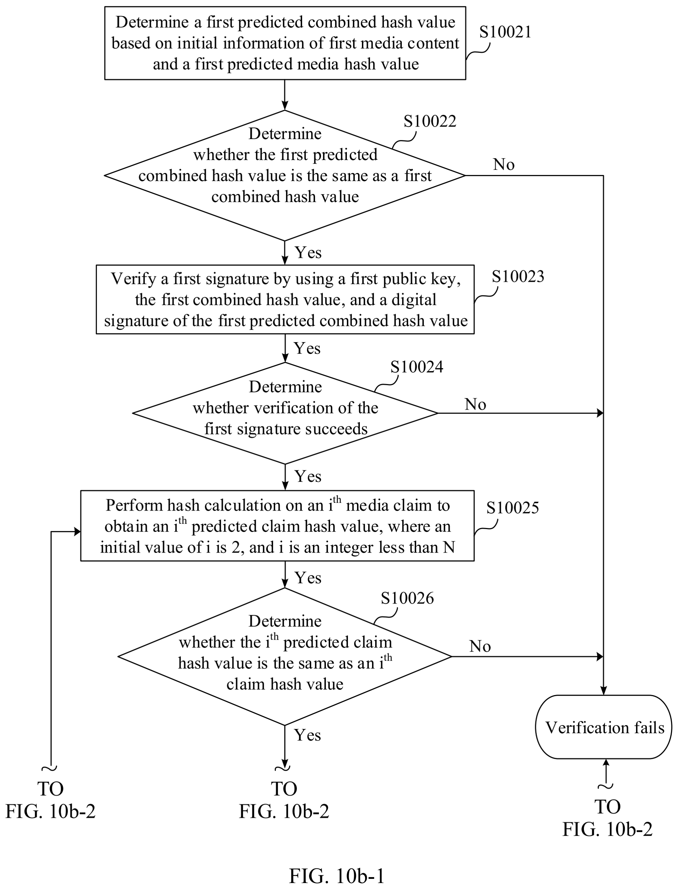

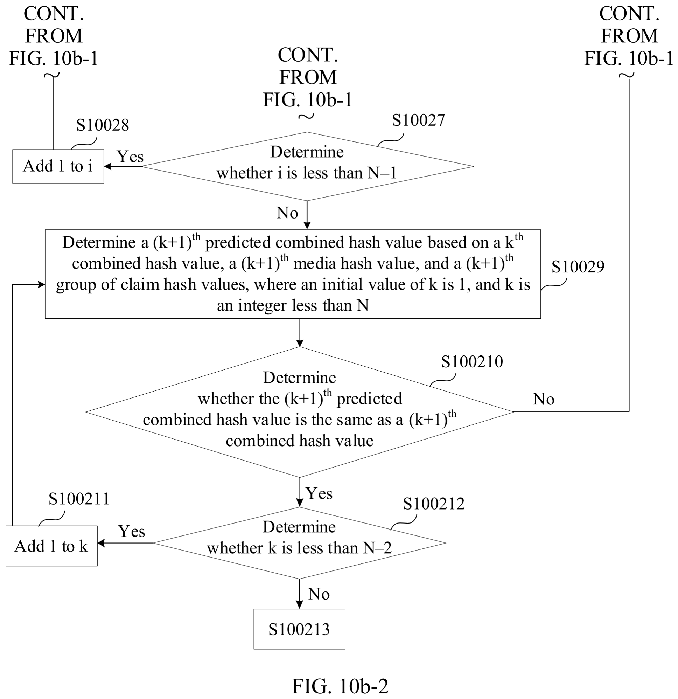

FIG. 10b-1 to FIG. 10c-2 are diagrams of an example of a verification process. With reference to FIG. 10b-1 to FIG. 10c-2, S1002 may include the following steps S10021 to S100224. In the embodiment of FIG. 10b-1 to FIG. 10c-2, the trust profile of the (N+1)^{th} piece of media content in the embodiment of FIG. 6a or FIG. 8a is verified.

S10021: Determine a first predicted combined hash value based on the initial information of the first media content and a first media hash value.

S10022: Determine whether the first predicted combined hash value is the same as a first combined hash value in a trust profile of the first media content.

For example, when the first predicted combined hash value is the same as the first combined hash value in the trust profile of the first media content, S10023 may be performed. When the first predicted combined hash value is different from the first combined hash value in the trust profile of the first media content, it may be determined that verification of the trust profile of the (N+1)^{th} piece of media content fails.

S10023: Verify a first signature by using a first public key, the first combined hash value, and a digital signature of the first predicted combined hash value, when the first predicted combined hash value is the same as the first combined hash value in the trust profile of the first media content.

For example, for S10021 to S10023, refer to descriptions of S9023 to S9025. Details are not described herein again.

S10024: Determine whether verification of the first signature succeeds.

For example, when the verification of the first signature succeeds, S10025 is performed; or when the verification of the first signature fails, it may be determined that the verification of the trust profile of the (N+1)^{th} piece of media content fails.

S10025: When the verification of the first signature succeeds, perform hash calculation on an i^{th} media claim to obtain an i^{th} predicted claim hash value, where an initial value of i is 2, and i is an integer less than N.

For example, hash calculation may be performed on the i^{th} media claim by using a hash algorithm, to obtain the i^{th} predicted claim hash value. It should be understood that the hash algorithm used in S10025 is the same as the hash algorithm used in S602.

For example, when there are a plurality of i^{th} media claims, hash calculation may be performed on each i^{th} media claim, to obtain an i^{th} predicted claim hash value corresponding to each i^{th} media claim.

S10026: Determine whether the i^{th} predicted claim hash value is the same as an i^{th} claim hash value in the trust profile of the (N+1)^{th} piece of media content.

For example, when there are a plurality of i^{th} media claims, it may be sequentially determined whether an i^{th} predicted claim hash value corresponding to each i^{th} media claim is the same as the i^{th} claim hash value. When the i^{th} predicted claim hash values corresponding to all the i^{th} media claims are the same as the i^{th} claim hash value, S10027 may be performed. When the i^{th} predicted claim hash value corresponding to the at least one i^{th} media claim is different from the i^{th} claim hash value, it may be determined that the verification of the trust profile of the (N+1)^{th} piece of media content fails.

S10027: When the i^{th} predicted claim hash value is the same as the i^{th} claim hash value in the trust profile of the (N+1)^{th} piece of media content, determine whether i is less than N-1.

For example, if i is less than N-1, S10028 is performed; or if k is equal to N-1, S10029 is performed.

S10028: Add 1 to i, and return to perform S10025.

It should be understood that S10025 to S10028 are optional steps, specifically depending on whether the trust profile of the (N+1)^{th} piece of media content includes the i^{th} media claim and the i^{th} claim hash value.

S10029: Determine a (k+1)^{th} predicted combined hash value based on a k^{th} combined hash value, a (k+1)^{th} media hash value, and a (k+1)^{th} group of claim hash values, where an initial value of k is 1, and k is an integer less than N.

S100210: Determine whether the (k+1)^{th} predicted combined hash value is the same as a (k+1)^{th} combined hash value in the trust profile of the (N+1)^{th} piece of media content.

For example, when the (k+1)^{th} predicted combined hash value is the same as the (k+1)^{th} combined hash value in the trust profile of the (N+1)^{th} piece of media content, S100211 may be performed; or when the (k+1)^{th} predicted combined hash value is different from the (k+1)^{th} combined hash value in the trust profile of the (N+1)^{th} piece of media content, it may be determined that the verification of the trust profile of the (N+1)^{th} piece of media content fails.

S100211: When the (k+1)^{th} predicted combined hash value is the same as the (k+1)^{th} combined hash value in the trust profile of the (N+1)^{th} piece of media content, determine whether k is less than N-2.

For example, if k is less than N-1, S100212 is performed; or if k is equal to N-1, S100213 is performed.

S100212: Add 1 to k, and return to perform S10029.

S100213: Verify a j^{th} signature by using a j^{th} public key, a j^{th} combined hash value, and a digital signature of the j^{th} combined hash value, where an initial value of j is 1, and j is an integer less than N.

For example, the j^{th} public key and a j^{th} private key are a key pair. It should be understood that a digital signature algorithm used in a j^{th} signature verification process in S100213 is the same as a digital signature algorithm used when the j^{th} private key is used for digital signing in a trust profile generation process.

S100214: Determine whether verification of the j^{th} signature succeeds.

For example, if the verification of the j^{th} signature succeeds, S100215 is performed; or if the verification of the j^{th} signature fails, it indicates that the verification of the trust profile of the (N+1)^{th} piece of media content fails.

S100215: Determine whether j is less than N.

For example, if j is less than N, S100216 is performed; or if j is equal to N, S100217 is performed.

S100216: Add 1 to j, and return to perform S100213.

It should be understood that S10029 to S100216 are optional steps, specifically depending on whether the trust profile of the (N+1)^{th} piece of media content includes the k^{th} combined hash value and a digital signature of the k^{th} combined hash value.

S100217: Perform hash calculation on the (N+1)^{th} piece of media content to obtain an (N+1)^{th} predicted media hash value.

S100218: Determine whether the (N+1)^{th} predicted media hash value is the same as an (N+1)^{th} media hash value in the trust profile of the (N+1)^{th} piece of media content.

For example, when the (N+1)^{th} predicted media hash value is the same as the (N+1)^{th} media hash value in the trust profile of the (N+1)^{th} piece of media content, S100219 is performed; or when the (N+1)^{th} predicted media hash value is different from the (N+1)^{th} media hash value in the trust profile of the (N+1)^{th} piece of media content, it indicates that the verification of the trust profile of the (N+1)^{th} piece of media content fails.

S100219: When the (N+1)^{th} predicted media hash value is the same as the (N+1)^{th} media hash value in the trust profile of the (N+1)^{th} piece of media content, perform hash calculation on an (N+1)^{th} claim to obtain an (N+1)^{th} predicted claim hash value.

S100220: Determine whether the (N+1)^{th} predicted claim hash value is the same as an (N+1)^{th} claim hash value in the trust profile of the (N+1)^{th} piece of media content.

For example, when the (N+1)^{th} predicted claim hash value is the same as the (N+1)^{th} claim hash value in the trust profile of the (N+1)^{th} piece of media content, S100221 is performed; or when the (N+1)^{th} predicted claim hash value is different from the (N+1)^{th} claim hash value in the trust profile of the (N+1)^{th} piece of media content, it indicates that the verification of the trust profile of the (N+1)^{th} piece of media content fails.

It should be understood that S100219 and S100220 are optional steps, specifically depending on whether the trust profile of the (N+1)^{th} piece of media content includes an (N+1)^{th} media claim and the (N+1)^{th} claim hash value.

S100221: Determine an (N+1)^{th} predicted combined hash value based on an N^{th} combined hash value, the (N+1)^{th} predicted claim hash value, and the (N+1)^{th} predicted claim hash value when the (N+1)^{th} predicted claim hash value is the same as the (N+1)^{th} claim hash value in the trust profile of the (N+1)^{th} piece of media content.

S100222: Determine whether the (N+1)^{th} predicted combined hash value is the same as an (N+1)^{th} combined hash value in the trust profile of the (N+1)^{th} piece of media content.

For example, when the (N+1)^{th} predicted combined hash value is the same as the (N+1)^{th} combined hash value in the trust profile of the (N+1)^{th} piece of media content, S100223 is performed; or when the (N+1)^{th} predicted combined hash value is different from the (N+1)^{th} combined hash value in the trust profile of the (N+1)^{th} piece of media content, it indicates that the verification of the trust profile of the (N+1)^{th} piece of media content fails.

S100223: When the (N+1)^{th} predicted combined hash value is the same as the (N+1)^{th} combined hash value in the trust profile of the (N+1)^{th} piece of media content, verify an (N+1)^{th} signature by using an (N+1)^{th} public key, the (N+1)^{th} predicted combined hash value, and a digital signature of the (N+1)^{th} combined hash value.

For example, the (N+1)^{th} public key and an (N+1)^{th} private key are a key pair. It should be understood that a digital signature algorithm used in an (N+1)^{th} signature verification process in S100223 is the same as a digital signature algorithm used when the (N+1)^{th} private key is used for digital signing in a trust profile generation process.

S100224: Determine whether verification of the (N+1)^{th} signature succeeds.

For example, when the verification of the (N+1)^{th} signature fails, it may be determined that the verification of the trust profile of the (N+1)^{th} piece of media content fails. When the verification of the (N+1)^{th} signature succeeds, it may be determined that the verification of the trust profile of the (N+1)^{th} piece of media content succeeds. For example, when the trust profile is true, a user may further determine authenticity of the (N+1)^{th} piece of media content, or consider that content in the (N+1)^{th} piece of media content is true. This is not limited in this application.

It should be understood that S100221 to S100224 are optional steps, specifically depending on whether the trust profile of the (N+1)^{th} piece of media content includes the (N+1)^{th} combined hash value and the digital signature of the (N+1)^{th} combined hash value.

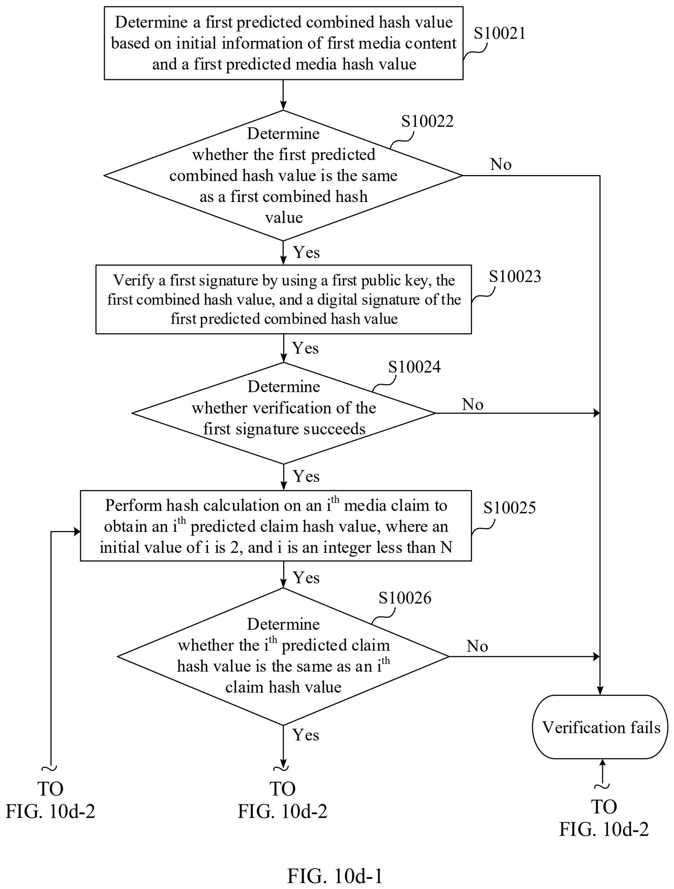

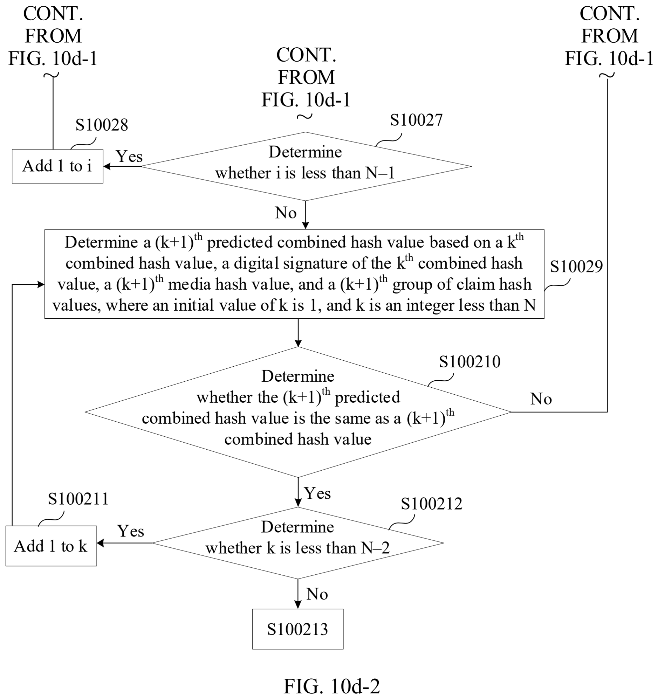

In the embodiment of FIG. 10d-1 to FIG. 10e-2, the trust profile of the (N+1)^{th} piece of media content in the embodiment of FIG. 6b or FIG. 8b is verified.

The verification method in FIG. 10d-1 to FIG. 10e-2and the verification method in FIG. 10b-1 to FIG. 10c-2 differ in steps S10023 and S100221. In step S10023, the (k+1)^{th} predicted combined hash value is determined based on the k^{th} combined hash value, the digital signature of the k^{th} combined hash value, the (k+1)^{th} media hash value, and the (k+1)^{th} group of claim hash values, where an initial value of k is 1, and k is an integer less than N. In step S100221, the (N+1)^{th} predicted combined hash value is determined based on the N^{th} combined hash value, a digital signature of the N^{th} combined hash value, the (N+1)^{th} predicted claim hash value, and the (N+1)^{th} predicted claim hash value.

FIG. 11 is a diagram of an example of a metadata generation apparatus. The metadata generation apparatus may be configured to perform the method in the foregoing embodiment. Therefore, for beneficial effects that can be achieved by the metadata generation apparatus, refer to the beneficial effects in the corresponding method provided above. Details are not described herein again.

With reference to FIG. 11, for example, the metadata generation apparatus may include:
a first data obtaining module 1101, configured to obtain first media content; and
a first information generation module 1102, configured to generate metadata of the first media content, where the metadata of the first media content includes initial information of the first media content, a first media hash value, a first combined hash value, and a digital signature of the first combined hash value, the first media hash value is a hash value of the first media content, and the first combined hash value is a hash value obtained by combining the initial information and the first media hash value.

For example, the metadata generation apparatus may further include:
a first hash calculation module, configured to perform hash calculation on the first media content to obtain the first media hash value.

For example, the first hash calculation module is further configured to perform hash calculation on the initial information and the first media hash value that are combined, to obtain the first combined hash value.

For example, the metadata generation apparatus may further include:
a first encapsulation module, configured to obtain a trust declaration based on the initial information of the first media content, the first media hash value, the first combined hash value, and the digital signature of the first combined hash value.

FIG. 12 is a diagram of an example of a metadata generation apparatus. The metadata generation apparatus may be configured to perform the method in the foregoing embodiment. Therefore, for beneficial effects that can be achieved by the metadata generation apparatus, refer to the beneficial effects in the corresponding method provided above. Details are not described herein again.

With reference to FIG. 12, for example, the metadata generation apparatus may include:
a second data obtaining module 1201, configured to obtain an (N+1)^{th} piece of media content, where the (N+1)^{th} piece of media content is obtained based on an N^{th} piece of media content; and
a second information generation module 1202, configured to generate metadata of the (N+1)^{th} piece of media content, where the metadata of the (N+1)^{th} piece of media content includes initial information of first media content, a first combined hash value, and a digital signature of the first combined hash value, and the first combined hash value is a hash value obtained by combining the initial information and a first media hash value; and the metadata of the (N+1)^{th} piece of media content further includes N+1 media hash values, where an (N+1)^{th} media hash value is a hash value of the (N+1)^{th} piece of media content, the first media hash value is a hash value of the first media content, and N is a positive integer.

For example, the metadata generation apparatus may further include:
a second hash calculation module, configured to perform hash calculation by concatenating one or more hash values in an N^{th} combined hash value, one or more (N+1)^{th} claim hash values, and the (N+1)^{th} media hash value, to obtain an intermediate hash value, where the intermediate hash value is used to determine an (N+1)^{th} combined hash value.

For example, the second hash calculation module is further configured to perform hash calculation by concatenating one or more hash values in the N^{th} combined hash value, a digital signature of the N^{th} combined hash value, the one or more (N+1)^{th} claim hash values, and the (N+1)^{th} media hash value, to obtain the intermediate hash value.

For example, the second hash calculation module is further configured to determine the (N+1)^{th} combined hash value based on the intermediate hash value.

For example, the second hash calculation module is further configured to perform hash calculation on the (N+1)^{th} piece of media content to obtain the (N+1)^{th} media hash value.

For example, the metadata generation apparatus may further include:
a second encapsulation module, configured to obtain a trust declaration based on the initial information, the first media hash value, the first combined hash value, and the digital signature of the first combined hash value.

For example, the second encapsulation module is further configured to obtain a trust record based on the (N+1)^{th} media hash value, the (N+1)^{th} combined hash value, and a digital signature of the (N+1)^{th} combined hash value.

For example, the second encapsulation module is further configured to obtain a trust profile of the (N+1)^{th} piece of media content based on the trust declaration and the trust record.

It should be noted that, when the metadata generation apparatus in the embodiment in FIG. 11 and the metadata generation apparatus in the embodiment in FIG. 12 belong to a same electronic device, the metadata generation apparatus in the embodiment in FIG. 11 and the metadata generation apparatus in the embodiment in FIG. 12 are a same apparatus. In this case, the first data obtaining module 1101 and the second data obtaining module 1201 are a same module, the first information generation module 1102 and the second information generation module 1202 are a same module, the first hash calculation module and the second hash calculation module are a same module, and the first encapsulation module and the second encapsulation module are a same module.

When the metadata generation apparatus in the embodiment in FIG. 11 and the metadata generation apparatus in the embodiment in FIG. 12 belong to different electronic devices, the metadata generation apparatus in the embodiment in FIG. 11 and the metadata generation apparatus in the embodiment in FIG. 12 are two different apparatuses. In this case, the first data obtaining module 1101 and the second data obtaining module 1201 are two different modules, the first information generation module 1102 and the second information generation module 1202 are two different modules, the first hash calculation module and the second hash calculation module are two different modules, and the first encapsulation module and the second encapsulation module are two different modules.

FIG. 13 is a diagram of an example of a verification apparatus. The verification apparatus may be configured to perform the method in the foregoing embodiment. Therefore, for beneficial effects that can be achieved by the verification apparatus, refer to the beneficial effects in the corresponding method provided above. Details are not described herein again.

With reference to FIG. 13, for example, the verification apparatus may include:
a first information obtaining module 1301, configured to obtain metadata of first media content, where the metadata includes initial information of the first media content, a first media hash value, a first combined hash value, and a digital signature of the first combined hash value, the first media hash value is a hash value of the first media content, and the first combined hash value is a hash value obtained by combining the initial information and the first media hash value; and
a first verification module 1302, configured to verify the metadata of the first media content.

FIG. 14 is a diagram of an example of a verification apparatus. The verification apparatus may be configured to perform the method in the foregoing embodiment. Therefore, for beneficial effects that can be achieved by the verification apparatus, refer to the beneficial effects in the corresponding method provided above. Details are not described herein again.

With reference to FIG. 14, for example, the verification apparatus may include:
a second information obtaining module 1401, configured to obtain metadata of an (N+1)^{th} piece of media content, where the (N+1)^{th} piece of media content is obtained based on an N^{th} piece of media content, the metadata of the (N+1)^{th} piece of media content includes initial information of first media content, a first combined hash value, and a digital signature of the first combined hash value, the first combined hash value is a hash value obtained by combining the initial information and a first media hash value, the metadata of the (N+1)^{th} piece of media content further includes N+1 media hash values, an (N+1)^{th} media hash value is a hash value of the (N+1)^{th} piece of media content, the first media hash value is a hash value of the first media content, and N is a positive integer; and
a second verification module 1402, configured to verify the metadata of the (N+1)^{th} piece of media content.

It should be noted that, when the verification apparatus in the embodiment in FIG. 13 and the verification apparatus in the embodiment in FIG. 14 belong to a same electronic device, the verification apparatus in the embodiment in FIG. 13 and the verification apparatus in the embodiment in FIG. 14 are a same apparatus. In this case, the first information obtaining module 1301 and the second information obtaining module 1401 are a same module, and the first verification module 1302 and the second verification module 1402 are a same module.

When the verification apparatus in the embodiment in FIG. 13 and the verification apparatus in the embodiment in FIG. 14 belong to two different electronic devices, the verification apparatus in the embodiment in FIG. 13 and the verification apparatus in the embodiment in FIG. 14 are two different apparatuses. In this case, the first information obtaining module 1301 and the second information obtaining module 1401 are two different modules, and the first verification module 1302 and the second verification module 1402 are two different modules.

In an example, FIG. 15 is a block diagram of an apparatus 1500 according to an embodiment of this application. The apparatus 1500 may include a processor 1501 and a transceiver/transceiver pin 1502, and optionally, further include a memory 1503.

Components of the apparatus 1500 are coupled together through a bus 1504. In addition to a data bus, the bus 1504 includes a power bus, a control bus, and a status signal bus. However, for clarity of description, various buses in the figure are referred to as the bus 1504.

Optionally, the memory 1503 may be configured to store instructions in the foregoing method embodiments. The processor 1501 may be configured to: execute the instructions in the memory 1503, control a receive pin to receive a signal, and control a transmit pin to send a signal.

The apparatus 1500 may be the electronic device or a chip of the electronic device in the foregoing method embodiments.

All related content of the steps in the foregoing method embodiments may be cited in function descriptions of the corresponding functional modules. Details are not described herein again.

An embodiment of this application further provides a chip, including one or more interface circuits and one or more processors, where the one or more processors receives/receive or sends/send data through the one or more interface circuits, and when the one or more processors executes/execute computer instructions, an electronic device is caused to perform the foregoing related method steps to implement the method in the foregoing embodiments. The interface circuit is a transceiver/transceiver pin 1502.

An embodiment further provides a computer-readable storage medium. The computer-readable storage medium stores computer instructions. When the computer instructions are run on an electronic device, the electronic device is caused to perform the foregoing related method steps, to implement the methods in the foregoing embodiments.

An embodiment further provides a computer program product. The computer program product includes computer instructions. When the computer instructions are executed by a computer or a processor, the computer is caused to perform the foregoing related steps, to implement the methods in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to cause the chip to perform the method in the foregoing method embodiments.

The electronic device, the computer-readable storage medium, the computer program product, or the chip provided in embodiments is configured to perform the corresponding method provided above. Therefore, for beneficial effects that can be achieved by the electronic device, the computer-readable storage medium, the computer program product, or the chip, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In an actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and the parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content of embodiments of this application and any content of a same embodiment may be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk drive, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose computer or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A metadata generation method, wherein the method comprises:
obtaining first media content; and
generating metadata of the first media content, wherein the metadata of the first media content comprises initial information of the first media content, a first media hash value, and a first digital signature, the first media hash value is a hash value of the first media content, the first digital signature is a digital signature of first data, and the first data is data determined based on at least the initial information and the first media hash value.

2. The method according to claim 1, wherein the first data is data obtained by combining at least the first media hash value and the initial information of the first media content, or the first data is data obtained by combining at least a hash value of the initial information and a hash value of the first media hash value.

3. The method according to claim 1, wherein the first data is a hash value determined based on at least the initial information and the first media hash value.

4. The method according to claim 3, wherein the first data is a hash value determined based on at least a hash value of the first media hash value and a hash value of the initial information of the first media content, or the first data is a hash value of data obtained by combining at least the initial information and the first media hash value.

5. The method according to any one of claims 1 to 4, wherein the metadata of the first media content further comprises the first data.

6. The method according to claim 1, wherein the metadata of the first media content further comprises a hash value of the first media hash value and a hash value of the initial information of the first media content.

7. The method according to claim 6, wherein the metadata of the first media content further comprises a first uniform resource locator (URL), and the first URL indicates a location of the initial information of the first media content or the first media hash value in the metadata of the first media content.

8. The method according to claim 6, wherein the first data is a hash value of data obtained by combining at least the hash value of the first media hash value, the hash value of the initial information of the first media content, and the uniform resource locator.

9. The method according to any one of claims 6 to 8, wherein generating the metadata of the first media content comprises:
obtaining the initial information of the first media content and the first media hash value;
encapsulating at least the initial information of the first media content and the first media hash value to obtain first encapsulated data (Trust Indicators);
performing hash calculation on the first media hash value to obtain the hash value of the first media hash value; and performing hash calculation on the initial information of the first media content to obtain the hash value of the initial information of the first media content;
encapsulating at least the hash value of the first media hash value and the hash value of the initial information of the first media content to obtain second encapsulated data (declaration hash);
digitally signing the first data, wherein the first data is data determined based on at least the hash value of the first media hash value and the hash value of the initial information of the first media content, to obtain the first digital signature;
encapsulating at least the first encapsulated data, the second encapsulated data, and the first digital signature to obtain a trust declaration; and
obtaining the metadata of the first media content based on at least the trust declaration.

10. The method according to claim 1, wherein generating the metadata of the first media content comprises:
obtaining the initial information of the first media content and the first media hash value;
encapsulating at least the initial information of the first media content and the first media hash value to obtain first encapsulated data (Trust Indicators);
digitally signing the first data to obtain the first digital signature, wherein the first data is data determined based on at least the first media hash value and the initial information of the first media content;
encapsulating at least the trust indicator and a digital signature of the first combined hash value to obtain a trust declaration; and
obtaining the metadata of the first media content based on at least the trust declaration.

11. The method according to any one of claims 1 to 10, wherein
the initial information of the first media content comprises at least one of the following: generation time of the first media content, an author name of the first media content, a digital content identifier of the first media content, a generation location of the first media content, information about a device of generating the first media content, a resolution of the first media content, a size of the first media content, a media type of the first media content, copyright information of the first media content, or a generation manner of the first media content.

12. A metadata generation method, wherein the method comprises:
obtaining an (N+1)^{th} piece of media content, wherein the (N+1)^{th} piece of media content is obtained based on an N^{th} piece of media content; and
generating metadata of the (N+1)^{th} piece of media content, wherein the metadata of the (N+1)^{th} piece of media content comprises initial information of first media content and a digital signature of first data; and the metadata of the (N+1)^{th} piece of media content further comprises N media hash values, wherein a first media hash value is a hash value of the first media content, an (N+1)^{th} media hash value is a hash value of the (N+1)^{th} piece of media content, the first data is data determined based on at least the initial information and the first media hash value, and N is a positive integer.

13. The method according to claim 12, wherein the first data is a hash value determined based on at least the initial information and the first media hash value.

14. The method according to claim 13, wherein the first data is a hash value determined based on at least a hash value of the first media hash value and a hash value of the initial information of the first media content, or the first data is a hash value of data obtained by combining at least the initial information and the first media hash value.

15. The method according to any one of claims 12 to 14, wherein metadata of the first media content further comprises the first data.

16. The method according to claim 12, wherein metadata of the first media content further comprises a hash value of the first media hash value and a hash value of the initial information of the first media content.

17. The method according to claim 16, wherein the metadata of the first media content further comprises a first uniform resource locator (URL), and the first URL indicates a location of the initial information of the first media content or the first media hash value in the metadata of the first media content.

18. The method according to claim 17, wherein the first data is a hash value of data obtained by combining at least the hash value of the first media hash value, the hash value of the initial information of the first media content, and the uniform resource locator.

19. The method according to claim 12, wherein the metadata of the (N+1)^{th} piece of media content further comprises an (N+1)^{th} claim.

20. The method according to claim 19, wherein the metadata of the (N+1)^{th} piece of media content further comprises a hash value of the (N+1)^{th} media hash value and a hash value of the (N+1)^{th} claim.

21. The method according to claim 19, wherein the metadata of the (N+1)^{th} piece of media content further comprises N digital signatures, an (N+1)^{th} digital signature is a digital signature of an (N+1)^{th} piece of data, and the (N+1)^{th} piece of data is data determined based on at least the (N+1)^{th} claim and the (N+1)^{th} media hash value.

22. The method according to claim 21, wherein the (N+1)^{th} piece of data is a hash value determined based on at least the (N+1)^{th} claim and the (N+1)^{th} media hash value.

23. The method according to claim 22, wherein the (N+1)^{th} piece of data is a hash value determined based on at least a hash value of the (N+1)^{th} claim and a hash value of the (N+1)^{th} media hash value, or the (N+1)^{th} piece of data is a hash value of data obtained by combining at least the (N+1)^{th} claim and the (N+1)^{th} media hash value.

24. The method according to claim 12, wherein the metadata of the (N+1)^{th} piece of media content further comprises an (N+1)^{th} uniform resource locator (URL), and the (N+1)^{th} URL indicates a location, of the (N+1)^{th} claim and the (N+1)^{th} media hash value, in the metadata of the (N+1)^{th} piece of media content.

25. The method according to claim 24, wherein the (N+1)^{th} piece of data is a hash value of data obtained by combining at least a hash value of the (N+1)^{th} claim, a hash value of the (N+1)^{th} media hash value, and the (N+1)^{th} URL.

26. The method according to claim 21, wherein the metadata of the (N+1)^{th} piece of media content further comprises the (N+1)^{th} piece of data, and the (N+1)^{th} piece of data is data determined based on at least the (N+1)^{th} claim and the (N+1)^{th} media hash value.

27. A verification method, wherein the method comprises:
obtaining metadata of first media content, wherein the metadata comprises initial information of the first media content, a first media hash value, and a first digital signature, the first media hash value is a hash value of the first media content, the first digital signature is a digital signature of first data, and the first data is data determined based on at least the initial information and the first media hash value; and
verifying the metadata of the first media content.

28. A verification method, wherein the method comprises:
obtaining metadata of an (N+1)^{th} piece of media content, wherein the metadata of the (N+1)^{th} piece of media content comprises initial information of first media content and a digital signature of first data; and the metadata of the (N+1)^{th} piece of media content further comprises N media hash values, wherein an (N+1)^{th} media hash value is a hash value of the (N+1)^{th} piece of media content, the first data is data determined based on at least the initial information and the first media hash value, and N is a positive integer; and
verifying the metadata of the (N+1)^{th} piece of media content.

29. A metadata generation apparatus, wherein the apparatus comprises:
a first data obtaining module, configured to obtain first media content; and
a first information generation module, configured to generate metadata of the first media content, wherein the metadata of the first media content comprises initial information of the first media content, a first media hash value, and a first digital signature, the first media hash value is a hash value of the first media content, the first digital signature is a digital signature of first data, and the first data is data determined based on at least the initial information and the first media hash value.

30. A metadata generation apparatus, wherein the apparatus comprises:
a second data obtaining module, configured to obtain an (N+1)^{th} piece of media content, wherein the (N+1)^{th} piece of media content is obtained based on an N^{th} piece of media content; and
a second information generation module, configured to generate metadata of the (N+1)^{th} piece of media content, wherein the metadata of the (N+1)^{th} piece of media content comprises initial information of first media content and a digital signature of first data; and the metadata of the (N+1)^{th} piece of media content further comprises N media hash values, wherein an (N+1)^{th} media hash value is a hash value of the (N+1)^{th} piece of media content, the first data is data determined based on at least the initial information and the first media hash value, and N is a positive integer.

31. A verification apparatus, wherein the apparatus comprises:
a first information obtaining module, configured to obtain metadata of first media content, wherein the metadata comprises initial information of the first media content, a first media hash value, and a first digital signature, the first media hash value is a hash value of the first media content, the first digital signature is a digital signature of first data, and the first data is data determined based on at least the initial information and the first media hash value; and
a first verification module, configured to verify the metadata of the first media content.

32. A verification apparatus, wherein the apparatus comprises:
a second information obtaining module, configured to obtain metadata of an (N+1)^{th} piece of media content, wherein the metadata of the (N+1)^{th} piece of media content comprises initial information of first media content and a digital signature of first data; and the metadata of the (N+1)^{th} piece of media content further comprises N media hash values, wherein an (N+1)^{th} media hash value is a hash value of the (N+1)^{th} piece of media content, the first data is data determined based on at least the initial information and the first media hash value, and N is a positive integer; and
a second verification module, configured to verify the metadata of the (N+1)^{th} piece of media content.

33. An electronic device, comprising:
a memory and a processor, wherein the memory is coupled to the processor; and
the memory stores program instructions, and when the program instructions are executed by the processor, the electronic device is caused to perform the method according to any one of claims 1 to 11.

34. An electronic device, comprising:
a memory and a processor, wherein the memory is coupled to the processor; and
the memory stores program instructions, and when the program instructions are executed by the processor, the electronic device is caused to perform the method according to any one of claims 12 to 26.

35. An electronic device, comprising:
a memory and a processor, wherein the memory is coupled to the processor; and
the memory stores program instructions, and when the program instructions are executed by the processor, the electronic device is caused to perform the method according to claim 27 or 28.

36. A chip, comprising one or more interface circuits and one or more processors, wherein the one or more processors receives/receive or sends/send data through the one or more interface circuits, and when the one or more processors executes/execute computer instructions, an electronic device is caused to perform the method according to any one of claims 1 to 26.

37. A computer-readable storage medium, wherein the computer-readable storage medium stores a computer program, and when the computer program is run on a computer or a processor, the computer or the processor is caused to perform the method according to any one of claims 1 to 26.

38. A computer program product, wherein the computer program product comprises computer instructions, and when the computer instructions are executed by a computer or a processor, the method according to any one of claims 1 to 26 is performed.
